# EUROPEAN PATENT SPECIFICATION

(11) **EP 1 940 902 B1**
(45) Date of publication and mention of the grant of the patent: **26.06.2013**
(21) Application number: 06765319.6
(22) Date of filing: 21.08.2006
(51) Int. Cl.: C08G 18/48, C08J 9/00, C08G 101/00

(54) **HYDRATABLE POLYMER MATERIALS**
HYDRATISIERBARE POLYMERMATERIALIEN
SUBSTANCES POLYMÈRES HYDRATABLES

(30) Priority: 20.08.2005 GB 0517157
(43) Date of publication of application: 09.07.2008
(73) Proprietor: Smart Tech Ltd., Glasgow G61 3NY (GB)
(72) Inventor: GRAHAM, Neil Bonnett, Glasgow G61 3NY (GB); FRASER, John Angus, Glasgow G3 8SE (GB); RASHID, Abdul, Glasgow G43 2AN (GB); MARTIN, Charles, Glasgow G75 0JU (GB)
(74) Representative: McDade, Sophie V.G.A.
(86) International application number: PCT/GB2006/003123
(87) International publication number: WO 2007/023270

(56) References cited:
- EP-A1- 0 939 092
- DE-A1- 3 627 236

## Description

### Technical Field of the Invention

The present invention relates to the field of hydratable polymer materials and, in particular, to an improved water-swellable material. In addition, the present invention relates to an improved method for preparing water-swellable materials. Furthermore, the present invention relates to water-swollen (hydrogel) materials, water-swellable foams and hydrogel foams.

### Background of the Invention

In the context of this description the term "foam" will be understood to mean a porous cellular polymer matrix material. Many water-swellable foams can absorb water to produce hydrogels; these are referred to as "hydrogel foams". The term "hydrogel foams" can be used to refer to water-swellable foams even before they have absorbed water (usually referred to as the xerogel state), and therefore before they are in the hydrogel state. In this context a hydrogel is understood to be a polymer that can absorb a relatively large amount of water into its molecular structure.

Hydrogel foams are a useful class of polymer that have found many applications in a diversity of fields, including horticulture and plant watering systems. These fields, in particular, have been the focus of much research due to the constant demand for improved and prolonged watering of plants.

Conventional watering reservoirs hold free liquid water made available to plants via a wicking mechanism, and can normally only provide plant watering for up to three weeks at a time. However, the watering is uncontrolled and works in a somewhat unsatisfactory manner. Furthermore, conventional watering reservoirs must be designed to fit the particular size and shape of container with which they are to be used.

Such conventional watering reservoirs are often used when transporting plants over significant distances for a significant period of time. The shipping of different plants around the world to meet consumer demand is now commonplace. However, the use of conventional watering reservoirs (or free water), particularly in the refrigerated transportation of plants, presents several problems. For example, the carriage of free water in open-containers by air transportation is discouraged.

Another problem associated with the transportation of plants, and indeed with the watering of plants in general, is the extremes of temperature that plants can be exposed to. In the case of refrigerated transportation, plants may be chilled to 3 to 10°C whilst in transport, but on arrival they may be subject to temperatures of 20 to 25°C or more. The plants' demands for water can vary hugely depending on the temperatures to which they are exposed, and conventional watering systems cannot address this change in demand. Similarly, a plant in a typical greenhouse can experience a temperature cycle of 20 - 30 °C over the course of 24 hrs, and therefore has different watering demands at different times of the day.

Due to this changing demand for water, plants often die from a lack of water or, conversely, are over-watered. Over-watering prevents air from getting to the roots of plants, thereby creating anaerobic conditions which are detrimental to plant health and which can cause root rot.

Hydrogels, and specifically hydrogels that are able to absorb significant quantities of water, are well known and are sold commercially. These are inter alia, cross-linked polymers and co-polymers, polyacrylamides, salts of polyacrylic acid, polymethacrylic acid, co-polymers of acrylic acid and acrylamide, polyvinylpyrolidone, and grafted starches known as "super slurpers".

Existing hydrogels, such as the porous solid material disclosed in EP 0647093, can be used for storing moderate quantities of water. The composition discussed in this document contains Perlite, and can be granular blocks, which are made by binding particles together using an open celled hydrophilic foam. The resulting product (Perlite containing blocks) when exposed to water, has a water swelling content of less than 350 parts per hundred (pph) dry weight. It should be emphasised, that this water content is'referred to incorrectly in EP 0647093 as 350%. A water content of less than 350 pph is not considered to be commercially competitive with conventional plastic tank reservoirs.

There are further problems and disadvantages associated with the use of the porous solid material as described in EP 0647093. For example, the use of Perlite (or any other) granules in the formulation precludes the use of standard urethane liquid dispensing machines, as the suspended solid leads to blockage of both the pumps and the lines of the machines. Moreover, the presence of Perlite (or similar granules) is undesirable in materials intended for an expanding water reservoir, as the sharp edges of the mineral act as multiple internal crack initiation sites, and cause significant reduction of the physical strength of the so-formed hydrogel in the water swollen.condition. It is therefore apparent that the porous solid materials as described in EP 0647093, whilst useful, have several drawbacks which limit their utility, particularly in the field of horticulture.

In particular, in order to be economically and commercially useful as a plant watering medium, it is desirable that a material can reach swelling levels of 80% (wt%) to > 95% (wt%), whilst maintaining its physical strength. The porous solid material as described in EP 0647093 does not fulfil this criteria.

DE 3627236 discloses polyurethane polymers that contain a mixture of ethylene oxide and propylene oxide with at maximum 23 ethylene oxide units between urethane bonds or between cross links. This material acts as a large free-water reservoir and the large water capacity is afforded by the very low density and the high micro-porosity of the material.

It is apparent that existing watering systems lack a degree of control and are unable to provide,regulated watering over a prolonged period of time. Furthermore, it is also apparent that existing porous solid materials that absorb water do not have the capacity to absorb sufficient water, nor do they have sufficient physical strength, to be useful as plant watering media. In addition, existing porous solid materials containing granular solids cannot be easily or conventionally prepared with conventional machinery and apparatus. Therefore it would be desirable to provide an improved system for providing water to plants in a controlled manner, over a prolonged period of time, at a commercially viable price.

Therefore, it is an object of the present invention to obviate, or at least mitigate, at least some of the drawbacks associated with the prior art.

Further aims and objects of the invention will become apparent from reading the following description.

### Summary of the Invention

According to a first aspect of the present invention there is provided a hydratable water-swellable polymer material that forms a hydrogel on absorption of water, said polymer material comprising a polyurethane polymer network for releasably retaining water, wherein the polyurethane polymer network comprises at least a proportion of available hydroxyl groups and wherein the material comprises units of the following formulae:

-CONH-X-NHCO-O-(CH₂CH₂O-)ₙ-;

-CO-X-CO-O-(CH₂CH₂O-)ₙ-;

-(CH₂CH₂O-)ₙ-(CONH-[X-NHCONH]ₘ)-; and

-X-(CH₂CH₂O-)ₙ-CH₂CH₂OH

wherein n is an integer from 100 to 300, and m is an integer of any value greater than or equal to unity, X comprises an aliphatic or aromatic di- or multi-functional unit, and wherein in at least some units X has a functionality greater than two.

"Available" polyol hydroxyl groups are polyol hydroxyl groups that have not reacted, and specifically those that have not reacted as part of the polymerisation process. In many cases, these available polyol hydroxyl groups result in pendant polyol chains, attached to the polymer network at one end only.

In this context "available" polyol hydroxyl groups do not include the small number of unreacted hydroxyl groups that are present in polymer network materials, but that are sterically hindered from reacting. Whilst in theory it is possible to react all of the polyol hydroxyl groups in the formation of a polymer network, in practice this is unattainable due to steric constraints placed on a small number of hydroxyl groups, and/or a small number of the species with which the hydroxyl groups react.

Therefore, in the present invention, available polyol hydroxyl groups are free to react in the formation of a polymer network, but have not reacted. In contrast sterically constrained hydroxyl groups, whilst unreacted, are not available to react in the formation of a polymer network. Both available.and constrained hydroxyl groups are able to interact with water and, it is believed, increase the water swellability of the network.

The water-swellable material can absorb vast quantities of water to form a water-swollen material, or a hydrogel.

Preferably the available hydroxyl groups are polyol hydroxyl groups attached to the polyurethane polymer network.

Preferably the ratio of available hydroxyl groups to urea and/or urethane bonds is approximately 1 to 3.

The 1:3 ratio of available hydroxyl groups to urea and/or urethane bonds can be achieved by reacting approximately 75% of the polyol hydroxyl groups with isocyanate groups. This provides a polymer network with sufficient strength to be of practical use, whilst also allowing the material to exhibit advantageous water swelling properties. Preferably the polymer material comprises a substantially porous structure.

A porous structure enables the material to absorb vast quantities of water. Furthermore, the porous structure facilitates the absorption of water from the exterior surface of the material to the internal structure. Similarly, the porous structure facilitates the delivery of water from the internal structure of the foam to the external surface of the material, and on to another medium. The pores allow the material to store capillary water and free water, and also allow the material to better absorb and deliver molecularly bound water.

The substantially porous structure can be a foam.

The foam can comprise approximately 5% to 95% porosity by volume.

The foam can comprise approximately 10% to 90% porosity by volume.

The foam can comprise approximately 20% to 80% porosity by volume.

The foam can comprise approximately 50% porosity by volume.

The foam can comprise a substantially open cell structure.

Preferably the proportion of open cells is at least about 50%. The proportion of open cells can be approximately 50%.

The foam can comprise at least a proportion of closed cell structures.

This proportion of open cells is as a proportion of the total open and closed cell content. The open cell content can however be increased by compression (i.e. through swelling or during normal use). The immediate availability of open cells in the material speeds up the expansion by swelling of the water-swellable material on its first use.

It is desirable for the internal structure of the materials to be substantially open cell, as open cell structures can absorb and release water more quickly than closed cell structures. However, by introducing a degree of closed cell structure, and having a balance between this and the open cell structure, it is possible to controllably adjust the properties of the materials.

The foam can comprise a plurality of continuous channels that extend from at least a first point on at least one exterior surface of the foam to at least a second point on at least one exterior surface of the foam.

The foam can comprise a plurality of continuous channels that extend from cells within the foam to at least one point on at least one exterior surface of the foam.

The continuous channels allow water to access the cells within the foam.

Optionally the polymer material comprises at least one additive.

The at least one additive can comprise a water-swellable material. The at least one additive can comprise a plant nutrient. The at least one additive can comprise an anti-oxidant.

The additives can be further water-swellable materials which, on contact with water, form hydrogels or hydrogel foams. The overall physical properties, and the ability of the material of the present invention to absorb water, can be easily altered by adding known hydrogel forming materials. Alternatively, or in addition, the additives can be stabilisers, antioxidants, plant food, plant hormones, dyes (soluble or insoluble), pigments, special effect agents (such as fluorescent agents) or any other desirable agents that can be added.

Preferably the polymer material is a water-swellable material.

Preferably the polymer material is a hydrogel.

The polymer material can comprise molecularly bound water.

Molecularly bound (or molecularly complexed) water is a slow release (slower than free water or capillary water) form of water. It is present as hydrates of the polymer in the water-swollen material. The molecularly complexed water allows the water-swollen material to provide water over an extended period of time.

The polymer material can comprise capillary water.

Capillary water is stored in suitably sized pores, cells, and/or continuous channels of the so formed water-swollen material. More specifically, the capillary bound water is present in fine pores in which the interfacial tension and the water/surface contact angle are low. The water is held in the capillaries and does not drain under gravity. Capillary water allows liquid water to be transferred to the growing medium, and therefore the plant, over a longer period of time than free water alone. For clarification, the growing medium is the combination of soil and roots and any other additive. The capillary water allows the water-swollen material to provide additional water to be provided to plants via a growing medium over a moderately extended period of time.

The polymer material can comprise free liquid water.

Free liquid water is the type of water that is instantly accessible to plants, and is what plants normally utilise. The free water is held within the larger holes and pores in the water-swollen material and will drain under gravity. Free water is particularly good for flowering plants which require a substantial amount of quickly available water.

The hydratable polymer material absorbs water as described above. The polymer is hydratable in that it can absorb free, capillary and molecular water, and then release it in a controllable fashion. The osmotic swelling of the water-swellable material to form a water-swollen material is akin to blowing up a balloon - the water inflates the molecular network to an osmotic pressure. The material of the present invention has good resistance to crack initiation and propagation and has high extensibility therefore giving the material a high degree of physical strength.

The physical strength can be defined in terms of the elongation (and nature) of the water-swollen state. The material in the water-swollen state can be stretched such that on release of the external force, the material returns to its original, or close to its original, state. The extensibility of the water-swollen material is between 100 - 5000 pph in any direction. This high extensibility means that a large amount energy is required to break the material, this amount of energy being roughly equal to the tensile strength multiplied by the extensibility.

According to a second aspect of the present invention there is provided a method for preparing a hydratable water-swellable polymer material forming a hydrogel in absorption of water, the method comprising the step of reacting at least one polyol with at least one isocyanate, wherein sufficient polyol hydroxyl groups react to form a polyurethane polymer network, and wherein at least a proportion of available polyol hydroxyl groups remain unreacted and wherein the polyol comprises polyethylene glycol having a number average molecular mass between 5000 and 20000 Da.

Preferably the method further comprises the step of providing a means for producing a foam.

The means for producing a foam can comprise water.

Water reacts with isocyanate to produce carbon dioxide, which acts as a foaming agent. Surface active agents may optionally also be used to control the structure of the foam as well as its "rising characteristics".

Optionally sufficient weight of foaming or frothing agent is provided to produce a foam.

The weight of foaming agent required will vary according to the type of polyol that is used.

Preferably the relative ratio of polyol hydroxyl groups to isocyanate groups is approximately OH:NCO, 1.0:2.0 and the relative ratio of water molecules is in the range 0.4 to 2.4.

Water and the polyol hydroxyl groups are in competition with each other to react with the isocyanate groups. Depending on the exact constituents, and the exact reaction conditions, various amounts of water will be tolerated. For example, it is possible that larger quantities of water might be used, as long as a suitable polymer network is produced. Similarly, it is possible that smaller quantities of water could be used, as long as there is sufficient foaming agent to form a foamed material.

However, restricting the amount of water used to this defined range affords a large degree of control over the formation of the foamed material, and allows the formation of foams with surprising and advantageous properties, far superior to poly(ethylene glycol) or poly(ethylene oxide) based materials known to the art. For example, materials made using the method outlined can absorb vast quantities of water, far in excess of any polyisocyanate reaction products reported in the prior art. Furthermore, when hydrated to form a hydrogel foam, the material has considerable physical strength and can withstand moderate stress imparted by, for example, a plant in a plant pot. At the same time the material has enough deformability to mould itself to the shape of the base of a container for plants and any drainage/breathing holes in the base of a contacting container to form water or air transmitting channels.

The isocyanate can be an aromatic polyisocyanate with functionality greater than or equal to 2.

Using isocyanates with functionality greater than 2 produces cross-linked polymers, which is desirable as cross-linking gives the polymers their physical rigidity and strength.

The polyol can comprise polyethylene glycol.

The polyol can be linear or branched and has two or more hydroxyls or other reactive end groups per molecule.

The polyethylene glycol can have a number average molecular mass between 5000 and 20000 Da.

Polyethylene glycol polymers of this nature are known as PEG 5000 to PEG 20000. It is desirable to use polymers within this range as they give water-swellable foams, and corresponding hydrogel foams, that exhibit the desirable properties discussed.

The polyethylene glycol can have a number average molecular mass between 6000 and 9000 Da.

Optionally the method further comprises the step of adding at least one disparate polyol.

The at least one disparate polyol can be polypropylene glycol.

Preferably the reaction is carried out at sufficient temperature to form a polymer network.

The temperature can be between approximately 70°C and approximately 130°C.

The temperature can be between approximately 80°C and approximately 100 °C.

The method can further comprise the step of providing at least one catalyst.

The catalyst can be present in one of the reactants, for example, in the polyol, or can be added to the reaction separately. The use of a controlled amount of catalyst aids the fine tuning of the rate of reaction, therefore providing a desired rate of reaction for the manufacture of materials with the desired properties outlined above. Optionally the method further comprises the step of adding at least one disparate water-swellable material.

Optionally the method further comprises the step of adding at least one plant nutrient.

Optionally the method further comprises the step of adding at least one anti-oxidant.

According to a third aspect of the present invention there is provided a polymer material produced by the method of the second aspect.

According to a fourth aspect of the present invention there is provided a potting composition for plants comprising a polymer according to the first aspect or the third aspect.

According to a fifth aspect of the present invention there is provided a cultivation medium for plants comprising a polymer according to the first aspect or the third aspect.

According to sixth aspect of the present invention there is provided a package for transporting plants comprising a vessel for receiving the root or root ball of a plant, the said vessel containing a quantity of a polymer according to the first aspect or the third aspect.

Optionally the package also contains a potting composition or growth medium, optionally containing soluble plant nutrients.

Optionally the polymer is pre-hydrated with an aqueous solution containing essential plant nutrients.

According the a seventh aspect of the present invention there is provided a method of stabilising water availability for a plant, comprising introducing a polymer according to the first aspect or the third aspect to a potting composition or cultivation medium, and hydrating the polymer.

The polymer can be added to a potting composition, or cultivation medium, after hydration of the polymer.

Alternatively the polymer can be added to a potting composition, or cultivation medium, before hydration of the polymer.

The polymer can be hydrated with an aqueous solution containing essential plant nutrients.

### Brief Description of the Drawings:

The present invention will now be described by way of example only, with reference to the accompanying drawings, in which:
Figure 1 is an illustration of the internal structure of the water-swollen foam;
Figure 2 is a graph showing the change in plant, pot and total weight with time for a Peace Lily from Trial 1;
Figure 3 is a graph showing the change in plant, pot and total weight with time for a Peace Lily from Trial 2;
Figure 4 is a graph showing the change in plant, pot and total weight with time for a Potmum Red from Trial 1;
Figure 5 is a graph showing the change in plant, pot and total weight with time for a Primula from Trial 1;
Figure 6 is a graph showing the change in plant, pot and total weight with time for a Primula from Trial 2;
   and
Figure 7 is a graph showing the change in plant, pot and total weight with time for a Hydrangea Bulb from Trial 2.

### Modes for performing the Invention

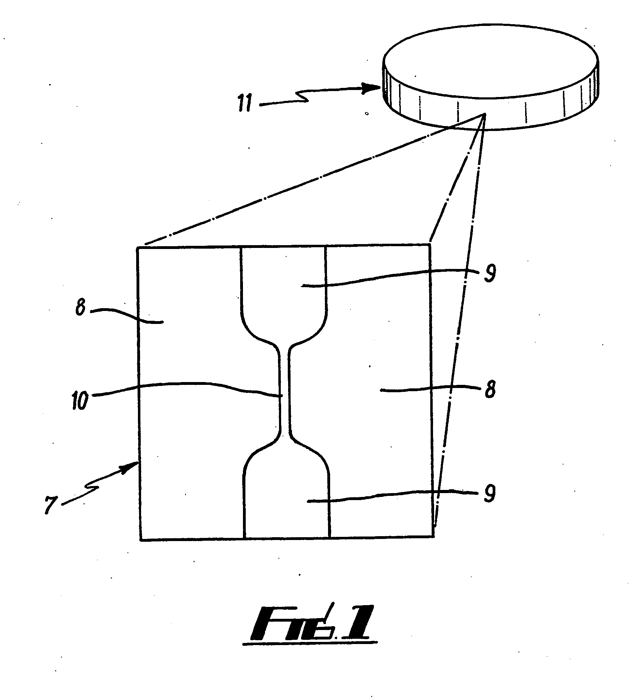

Referring firstly to Figure 1, an exploded view of a section of a water-swollen hydratable polymer material 11 in the form of a slice, which illustrates the microscopic structure, is generally depicted at 7. The microscopic structure 7 of the water-swollen material 11 comprises a polymer network material 8 in which there are large channels 9 and capillaries 10. The capillaries 10 contain capillary bound water which is held against gravity in fine pores and channels. The large channels 9 contain free water in large holes and pores; the water being drainable under the forces of gravity. The polymer network material 8 contains molecularly complexed water as hydrates of the polymer material. The polymer is able to releasably retain water.

In the preferred embodiment, the water-swellable material is a polymer network with polyethylene glycol (PEG) 8000 chains connected by urea or urethane bonds. Approximately 25% of the hydroxyl groups on the polyol remain available; that is they do not contribute to the polymer network even though they are available for reaction. Thus the ratio of hydroxyl groups to urea and/or urethane groups in the hydratable polyurethane polymer material is approximately 1:3. In the preferred embodiment, the water-swellable material is a foam and has approximately 50% porosity by volume. However, it will be appreciated that the useful water-swellable material need not necessarily be a foam. Also, it will be appreciated that foamed materials can have a porosity greater than or less than 50%, and that useful materials are found between 5% and 95% porosity by volume. Useful materials are also found between 10% and 90%, and between 20% and 80% porosity by volume. Furthermore, different types of polyol can be used, and the PEG used can be between PEG 5000 and PEG 20000, and is most usefully between PEG 6000 and PEG 9000.

The hydratable or water-swellable polymer material of the present invention can absorb water to form a water-swollen material, or a hydrogel. Under an elevated pressure in a pressurised reaction vessel, foaming can be prevented. In the preferred embodiment, the water-swellable material is a foam, and will absorb water to form a water-swollen hydrogel foam.

Having approximately 75% of the polyol hydroxyl groups reacted to form part of the polymer network provides a material with sufficient strength to be useful, whilst also exhibiting the ability to absorb vast quantities of water. Specifically, having approximately 25% free polyol hydroxyl groups provides a material that absorbs vast quantities of water, far in excess of those reporter in the prior art for the reaction product of polyethylene glycols with polyisocyantes.

In the preferred embodiment of the method, the water-swellable material is prepared by reacting polyethylene glycol (PEG) 8000 with an aromatic diisocyanate, and a controlled amount of water. The amount of water used must be sufficient to form a porous cellular polymer matrix material, and not more than will be tolerated in the formation of a polymer network. The reaction is carried out at an elevated temperature such that the material melts and then cures to form a solid polymer. The elevated temperature may be from an external energy source, or may be provided by the heat of the reaction itself. In the preferred embodiment 50% of the volume of the water-swellable foam is porous, although it will be appreciated that the water-swellable foam can have any degree of porosity that exhibits the desirable properties discussed. It will also be understood that the material can have various degrees of porosity, from 5 - 95% by volume.

In the preferred embodiment the relative ratio of polyol hydroxyl groups to isocyanate groups is approximately OH:NCO, 1.0:2.0 and the relative ratio of water molecules is in the range 0.4 - 2.4. However, it will be appreciated that less water can be used, as long as a suitably foamed structure is achieved. Similarly, it will be appreciated that additional water can be used, as long as a useful polymer network is produced. The effective reactive functionality of the reacting mixture must be greater than 2 to obtain a network. This functionality can be equally well achieved in part, or entirety, via the polyol or an added low molecular weight polyalcohol. 1,2,6-hexanetriol is an example of a convenient trifunctional low molecular weight polyol that can be used. The polyol is thus not restricted to difunctional polyethylene glycols, but can also be low molecular weight tri and tetra functional polyethylene glycols, suitable for making foams.

Although the preferred embodiment uses an aromatic diisocyanate, others such as aliphatic isocyanates can be used. Ideally, the isocyanate has functionality greater than or equal to 2, and preferably has functionality of 2.1. Using isocyanates with functionality greater than 2 produces cross-linked polymers, which is desirable as cross-linking gives the polymers their physical rigidity and strength. This is certainly the case when reacting with a diol, but more generally, it is preferable that the reactants comprise a molar excess of isocyanate groups, relative to hydroxyl groups. Aliphatic isocyanates are slow reacting, and are less preferred as the sole isocyanate, but can be used effectively as a proportion of the isocyanate utilised to reduce and control the rate of reaction (setting time).

As mentioned previously, the preferred polymer is PEG 8000, although polyethylene glycol with an average molecular mass between 5000 and 20000 Da can be used. It is desirable to use polymers within this range as they give a fluid molten mix during preparation, and water-swellable foams, and corresponding hydrogel foams, that exhibit the desirable properties discussed. The higher end of the range of polyethylene glycol (up to c.a. PEG 20000) necessitate the use of a higher temperature to reduce the high viscosity of these higher molecular weight polymers. Other polyols such as polypropylene glycol and polypropylene oxide of various molecular weights may also be utilised. Polypropylene oxide contains both primary and secondary aliphatic end groups which provide a modifier to slow the setting rate, and allow some control over the period of fluidity at the foaming stage of the reaction. Many polyols such as polypropylene oxide alone, or epoxide, or ethoxide endcapped, and are commonly available and may be utilised.

As explained above, restricting the amount of water used when preparing the water-swellable foam to within this defined range affords a large degree of control over the formation of the molecular structure, and allows the formation of materials with surprising and advantageous properties. The materials made using the method outlined can absorb vast quantities of water, far in excess of any reported in the prior art for hydrogels made from polyethylene glycols reacting with polyisocyanates. Furthermore, when hydrated to form a hydrogel foam, the material has considerable physical strength and can withstand moderate stress, such that the material retains its shape.

Controlling the amount of water within this well defined region controls the weight of carbon dioxide gas (the foaming agent) produced during the reaction, and thus allows accurate control over the formation, and therefore the physical properties, of the hydratable water-swellable foam, and the corresponding water-swollen (hydrogel) foam. If too little water is used then there is insufficient production of carbon dioxide to produce a foam. If too much water is used then the material produced will not display the enhanced water absorption properties displayed by the material of the present invention, or will produce a liquid or meltable non-cross-linked product. This is demonstrated later under discussion of the experimental preparation.

The chemical reactions occurring during the formation of the foamed material are many, competitive and interactive. The product material is formed as a result of the outcome of the different reaction rates which change with the initial and transient concentrations of the reactive groups, the temperature, the molecular weight of the unit to which they are attached, the viscosity and the dielectric constant of the reaction mixture at a given time in addition to other factors. These factors are not defined, and must be used as a guide only.

The dominant reactions believed to be occurring are at the onset of the reaction. The reactions that occur are illustrated in equations numbered 1 to 4 below.

R'OH + RNCO **→** R'OCONHR (1)

H₂O + RNCO **→** RNHCOOH (2)

RNHCOOH → RNH₂ + CO₂ ↑ (3)

RNH₂ + RNCO → RNHCONHR (44)

Initially, only reactions 1 and 2 can occur. These are, respectively, the initiation of the growth of the future PEG hydrogel network and the formation of a non-network carbamic acid. At this stage, the reaction mix is fluid and uncombined. The second stage is that of foaming by the significant progress of reaction 3, which evolves carbon dioxide and causes foaming until either, no more carbon dioxide is generated, or the reaction mass ceases to be fluid by virtue of cross-linking. At this stage, the reacting mass continues to expand with the rise in temperature, and the reaction becomes diffusion controlled. The amine groups can only react to form polyurea cross-linking domains. As is always found in cross-linked networks, there remain a modest proportion of unreacted hydroxyl, amine and isocyanate groups, which are unable to physically interact, and thus react, with another reactive group.

As the residual hydroxyl groups in the present invention must be end groups on PEG units, they are predominantly pendant groups of the structure NHCOO-(CH₂CH₂O)ₙH, where n represents approximately Mₙ PEG/MW (CH₂CH₂O) = 8000/42 = 190.

This simple analysis, combined with the assumption that the amine group reacts more rapidly with isocyanate than the hydroxyl group, demonstrates how the ratio of reactants (OH:NCO, 1.0:2.0) decides the proportion of the initial hydroxyl groups that react, and the amount of hydroxyl groups that are present at the end of the reaction. The network is built from PEG molecules which have both end-group hydroxyls reacted, and which have side-chains formed from PEG molecules which have only one of their two end groups reacted.

Shown below as formulae 5 to 8 are formulae for the (major) internal structure of the foam material of the present invention. It will be appreciated that these formulae are examples of a representative structure of the foam. In these formulae, n is an integer having, typically, values from 100 - 300, and m is an integer of any value greater than or equal to unity.

- (-CONH-X-NHCO-O- (CH₂CH₂O-)ₙ- (5)

-(-CO-X-CO-O-(CH₂CH₂O-)ₙ- (6)

- (CH₂CH₂O-)ₙ- (CONH- [X-NHCONH]ₘ- (7)

The composition must contain at least some units in which X has a functionality greater than two. Also, there can be molecules branched from the network only at X, wherein the said molecules are not attached to the network at their other extremity, thus forming a unit which is pendant to, but not a part of the network. An example of this is given by the structure:

X- (CH₂CH₂O-)ₙ-CH₂CH₂OH (8)

X comprises an aliphatic or aromatic di- or multi-functional unit which, when difunctional, produces the effective chain network via extension structures. When X is of higher functionality, it produces branching and/or crosslinking structures of the resulting molecular network. Branching to pendant units, and branching chain extension to form a network, both contribute to the structural integrity of the material of the present invention. The branching of crosslinking function can be introduced, inter alia, by polyfunctional isocyanates or by polyfunctional alcohols or amines.

The term network in this context means all units which are effectively connected elastically to the structure which is able to transmit mechanical stresses via bonds both into and out of each unit. This means that any such unit under discussion must itself be connected through at least two bonds into the network.

The above structures are indicative of typical structures recognised as components of the inventive polymers.
Thus, the poly(ethylene oxide) units may be partially or completely replaced by other units, for example other polyethers such as poly(propylene glycol). The hydroxyl hydrogen end-group in 8 may be replaced with many alternative non-functional groups such as e.g., methyl or benzoyl. These groups are well known to those skilled in the art. They can be readily made separately by e.g., pre-reaction of the poly(ethylene glycol) so that a proportion of the poly(ethylene glycol) molecules containing only one terminal hydroxyl are used as one of the ingredients of the foaming mixture, thereby guaranteeing their presence in the final product.

The aforesaid analysis and description is presented to teach those skilled in the art to be able to logically modify the reaction to control the rate of foaming and to produce products with desired physical characteristics. For example, the functionality and/or reactivity of the initial isocyanate utilised can be reduced to increase the degree of reaction at gelation, and thereby extend the fluid foaming expansion period.

Using a different approach, the use of a polyol modifier such as a polypropylene glycol which contains one primary and one secondary alcohol as end groups, will delay the gel point and increase the pendant chain proportion. Similarly, singly end-capped PEG polymers or PEG/PPG copolymers (sold commercially) can be utilised. Many such variations for reaction and product control will be obvious to those skilled in the art in the context of the disclosures contained herein. For any given initial composition of reactants, the optimum water content can be experimentally determined by a series of experiments in which the water content of the reaction mixture is varied from that provided in the PEG as supplied, and an increased level of water is added at the stage of polymerisation (see experimental notes).

It is also possible to use different foaming agents, such as Solkane™. Also, there may be dissolved gases in the reactants that enable bubble nucleation, which can contribute to the foaming process. Furthermore, foaming can be achieved using known frothing techniques and/or known frothing agents.

The water used in the reaction can be present in the reactants, and specifically in the polyethylene oxide or the polyol. Alternatively, or in addition, the water can be added in a controlled manner to achieve the desired amount of water. In some cases it may be necessary to remove water from the reactants prior to carrying out the reaction to ensure the reaction is carried out with the water present within the required range.

In a further embodiment of the method, the water-swellable material is prepared by reacting polyethylene glycol (PEG) 8000 with an aromatic diisocyanate, without the presence of water. In this embodiment there is formed a non-foamed water-swellable material. The reaction is carried out at an elevated temperature, if necessary under pressure, such that the material cures to form a solid polymer. The elevated temperature may be from an external energy source, or may be provided by the heat of the reaction itself.

In this further embodiment the relative ratio of the polyol hydroxyl groups to isocyanate groups is approximately OH:NCO, 1.0:0.75. Using this ratio leaves approximately 25% of the polyol hydroxyl groups available or free, whilst 75% of the polyol hydroxyl groups have reacted to form urea or urethane bonds, forming part of the polymer network.

The water-swellable foam of the present invention can absorb vast amounts of water, far in excess of those foams formed from the reaction of polyethylene glycol and isocyanates reported in the prior art. Specifically, the material of the present invention typically absorbs 83.3 to 95.2% by weight water, to produce a water-swollen material (a hydrogel foam). The material can absorb approximately 500 to 4000 pph water as molecularly and capillary bound water. Furthermore, the material can act as a conventional reservoir for approximately a further 500 to 4,000 pph water. As such, the material of the present invention can typically hold between 1,000 to (in excess of) 8,000 pph (i.e. up to and greater than around 80%) water.

The method can be further refined by using a controlled amount of catalyst. The catalyst can be present in one of the reactants, for example, in the polyethylene oxide or polyol, or can be added to the reaction separately. The use of a controlled amount of catalyst allows the selection of a desired rate of reaction for the manufacture of a water-swellable material with the desired properties as outlined above. The catalyst can also alter the relative rates of reactions 1 to 4 to improve the reaction and/or product characteristics.

The catalyst can be present in one of the reactants, or can be added to the reaction separately. In most cases the catalyst is a salt present in the polyol (or polyethylene oxide) as a product of the neutralisation step involved in the preparation of these materials. The salts produced by these neutralisations are known as ash, and are often referred to as ash content. Different batches of polymer, as well as PEG from different suppliers, have different types and quantities of ash content. However, it has been found that an ash content of between 430 ppm and 710 ppm is desirable to produce a suitable water-swellable material. In the absence of a suitable ash content (for example, when the polymer supplied has less than 430 ppm ash content), appropriate volumes of another salt can be added to provide the desired overall rate of reaction. For example, a suitable amount of 20% sodium sulphate solution can be added to the reaction to provide the desired rate of reaction. Other catalysts including, but not limited to, metal salts (such as ferric chloride), tin compounds, tertiary amines, and acids (such as p-toluenesulphonic acid and benzoyl chloride) can also be used. The type and amount of catalyst used will be dependent on the particular curing and mixing system used.

Solvents can also be introduced into the reaction mixture to alter the rate of reaction. In particular, varying the amount of an inert solvent in the reaction mixture can alter the rate of reaction; the more solvent present, the slower the reaction. Small amounts of solvent can also be added to enable better mixing, or to act as blowing agents as is well known in polymerisation technology. In this context, blowing agents are volatile, non-reactive compatible liquids which are converted to gas to form a plastic/gas foam, during the polymerisation reaction. They are commonly low boiling point hydrocarbons, or halogenated hydrocarbons.

Further additives can be included in the materials such as, but not limited to, additional expandable absorbent materials, hydrogels, foams, anti-oxidants, dyes, pigments or other colouring agents, stabilisers, plant nutrients, plant food, plant hormones special effect agents (such as fluorescent agents) or any other agents that can be added.

Adding known granular hydrogels to the material of the present invention alters its ability to absorb water and its overall physical properties, therefore making the material easily tuned. These known hydrogels are preferably used in very fine particle size so that they do not prevent the reaction mixture from being dispensed through commercially available mixing machines. Known materials suitable for addition include *inter alia,* cross-linked polymers and co-polymers, polyacrylamides, salts of polyacrylic acid, polymethacrylic acid, co-polymers of acrylic acid and acrylamide, polyvinylpyrolidone, and grafted starches among others.

The foamed materials have a substantially open cell structure, but also contain a proportion of closed cells.

Open cell structures absorb and release water more quickly than closed cell structures. The cells can be considered elongated spherical, oval or cylindrically shaped cavities. However, the foamed materials can also contain cavities of other shapes, including non-cylindrical shapes. The open cells can also form continuous channels to the exterior surface of the foamed materials, thereby presenting a transport medium for water into and out of the material.

On exposure to water, the water-swellable foam forms a hydrogel foam that comprises free liquid water, capillary water and molecularly bound water. Free liquid water is instantly accessible to plants, and is what plants normally utilise. Free water is the same type of water that is provided by conventional watering reservoirs. Capillary water is stored in the pores, cells, cavities and/or continuous channels of the so formed hydrogel foam. A small weight of solid foam containing x% of capillary channels may be increased in volume by a factor of 10 relative to the total volume and, consequently, by a factor of 10 relative to the volume of the capillary channels.

The material of the present invention allows liquid water to be transferred to the growing medium, and therefore the plant, over a longer period of time than free water. The capillary water allows the hydrogel foam to provide additional water to be provided to plants over a moderately extended period of time. Molecularly bound water is a slow release (slower than free water or capillary water) form of water. This type of water allows the hydrogel foam to provide watering over an extended period of time. The molecularly bound water is present in the hydrogel foam as different types of hydrate. For example, the molecularly bound water can be present as various types of polyethylene oxide hydrate (from mono to hexahydrate).

The molecularly bound water for each specific hydrate equilibrates with water vapour over a range of values - typically from 70% relative humidity to just below 100% relative humidity. This complexed, or molecularly bound, water only becomes available to the plant roots by the growing medium drying to an extent at which the contained water is itself in equilibrium with water vapour at, for example, 70% to 95% relative humidity. At such values, the complexed water in the material evaporates and/or diffuses into the growing medium to maintain the plant. Most plants survive well with water supplied at this level of equilibrium relative humidity. The molecularly bound water is therefore released over a prolonged period of time, thus allowing the material to provide watering for times in excess of those reported in the prior art.

These properties of the material of the present invention are most important to its efficacy. In many commercial non-PEG hydrogels, the growing medium requires (for example) a relative humidity of 20% to 70% to pull the contained water into said growing medium. This is of little use for plant maintenance and may, in fact, work in reverse by pulling moisture away from the growing medium, hastening the death of the plant. A simple example of this would be an attempt to use silica gel (a drying agent). Silica gel equilibrates with water at 20% relative humidity and clearly is of no use as a water-supplying hydrogel to plants.

The prior art document EP 0647093 does not describe materials that can absorb vast amounts of water whilst retaining their physical strength, nor does it provide any indication that a material with approximately 25% available polyol hydroxyl groups will provide materials that can absorb water to the economically and commercially desirable levels described, whilst simultaneously retaining good physical strength. Furthermore, there is no indication in the prior art as to the importance of water content and foaming agents, and specifically there is no suggestion that controlling the water content of the reaction within the range specified will produce materials with advantageous properties.

The three types of water present in the hydrogel foam allow the material to provide water to plants over a long period of time, without the need for re-watering. Therefore, the material of the present invention allows plants to survive, without additional watering, for a period of time far in excess of that achievable by conventional watering reservoir systems or prior art hydrogels.

In addition to providing delayed release molecularly bound water, capillary held water, and freely available water, the hydrogel foam can also provide a lifting mechanism for water. In particular, the capillarity of the hydrophilic foamed materials provide a lifting mechanism for the transport of water from, for example, water below the level of the base of a plant pot into the pot, or specifically the growing medium, via the holes that are normally found in the base of a pot. That is, the foamed materials are located outwith the pot in which the plant and growing medium are located. This allows a user to safely and conveniently add water in any desired quantity, and as a mix of free and bound forms, to meet the needs of plants. This is especially useful as different plants have very different watering requirements. For example, plants such as Chrysanthemums and Begonias in full flower can demand up to 100 times the requirement of some greenery plants such as Dracaena.

When preparing the water-swellable foam, before curing takes place, the porous product may be mixed by hand or can be mixed and dispensed by a mechanical mixing and dispensing machine. The mixture of reactants can be dispensed into moulds of any desired shape including cuboids, cylinders and specially designed shapes. In many cases it is desirable to convert the moulded water-swellable foam material into thin slices with shortest side between 0.5 cm and 5 cm in dimension. The rate of swelling of slices is of considerable practical importance, and the rate of swelling of these slices is faster for thinner slices, and for materials where the cell structure is approaching 100% open cell structure. In contrast, compositions with high closed cell water content take a longer time to absorb water, but also take a longer time to release the water they absorb. This feature of closed cell structures can be useful when a very prolonged water supply is required, such as in the care of low water demand plants. However, in general, a fast response from an open cell structure is preferred.

The open cell content of the water swollen foams can be revealed by a very simple test. A uniform slice of the foam is cut and allowed to swell overnight in water. A thin plastic rule is placed alongside the slice as it floats. The volume of the slice above the surface of the water, and that below the surface, can be determined and the density of the swollen slice can be calculated from Avogadro's Principle. Assuming the density of the swollen hydrogel part of the slice is approximately that of water, the difference in density formed is due to closed cells which contain no water. A value of less than 50% is desirable. Consequently, a successful foam will float, fully swollen, in water with 50% to 90% submerged beneath the water surface.

Another surprising, and useful, property of the water-swellable foam when hydrated, and thus in the hydrogel foam state, is its temperature dependent water absorption. The higher the ambient temperature, the more capillary bound and molecularly complexed water the hydrogel foam releases; consequently it makes more free water available. Conversely, the lower the ambient temperature, the more capillary bound and molecularly complexed water the hydrogel foam retains; consequently it makes less free water available.

As described earlier, the refrigerated transport of plants is now a large multinational business. However use of free water to maintain plants in transit is undesirable, especially in the case of air transportation, where the use of free water is discouraged. The temperature dependent water absorption properties of the hydrogel foam allow it to overcome this problem. At lower temperatures, at which plants are transported (for example, 3 °C to 10 °C), a significant proportion of the water in the hydrogel foam is capillary bound or molecularly complexed, thus minimising the amount of free water available. In contrast, at higher temperatures (for example, 10 °C to 35 °C), that plants are exposed to on delivery, a significant proportion of the water is released from being capillary bound or molecularly complexed to being free water, quickly available to the plant.

Cut or potted plants are often shipped as plants or stems in bud, and are intended to open after arrival for display, when they require more water. The release of water on warming conveniently provides for this sudden increase in the watering requirement on flowering, and helps alleviate the stress on the plants. Therefore, this feature of the hydrogel foam prevents plants from arriving for sale with either reduced, or an unpredictable, life expectancy.

This same feature of the invention allows the hydrogel foam to provide water to a plant when it most needs it, and to remove water from a plant when it least needs it. For example the hydrogel foam will imbibe water overnight (when cool) and release water with the increasing temperature of the day. Therefore, the plant is simultaneously protected from over watering and under watering. Furthermore, the hydrogel foam freely exchanges water with the growing medium. Thus, the hydrogel foam will supply or remove water from the growing medium, depending on the demand of the plant for water. The result of this is that the hydrogel foam supplies water to the growing medium at increased temperatures (during the day) and removes water from the growing medium at decreased temperatures (at night). This ensures that the plant roots are in a porous medium, and can be accessed by air, as is necessary to prevent anaerobic conditions which are detrimental to plant health (i.e., root rot). This property may be further exploited in various ways not mentioned explicitly herein

The hydrogel foam can also be used to indicate, by its visual appearance, how much water has been used by a plant and/or how much water should be added to a plant. For example, a slice of water-swellable foam of 1.5 cm thickness and 3 cm diameter, in the dry state, absorbs approximately 200 mL of molecularly complexed and capillary bound water. Such a slice can be placed in a closed plant pot, and a second plant pot (with holes in the bottom) containing a plant, can be placed on top of the slice in the closed pot. The hydrated slice has sufficient physical strength to support the second plant pot containing a plant. The hydrated slice (or the hydrogel foam) is a pliable material which allows the base of the second plant pot containing the plant to press down on the slice such that effective capillary contact is made between the growing medium inside the second plant pot, and the slice.

Extra water can be added to cover the slice to any desired degree when watering initially, or rewatering. When watering chrysanthemums, for example, a rewatering period of around one week is desired, the amount of water used during the week is approximately 500 mL to 600 mL. Therefore, in addition to the 200 mL of water added to and absorbed by the slice, another (approximately) 300 mL of water would be added to cover the slice at each rewatering. At the time of rewatering, the amount of water consumed, and the available water can be readily assessed by the presence, or absence, of visible liquid water, and the extent of swelling of the slice. A somewhat diminished slice that swells visibly on the addition of water is the most desirable situation, as this indicates that the plant has been provided with water over the entire watering period.

Chrysanthemums can die suddenly over one or two days in the absence of water. However, by using the hydrogel foam as a watering system, plants such as chrysanthemums are provided initially with fast release water and later with slow release water which affords the plant a longer period of safety before death occurs and a longer period of time over which the plant, if watered, can recover completely.

The use of the hydrogel foam in the type of arrangement described above prevents the roots and growing medium from becoming flooded, while providing water to the roots and growing medium as the plant requires, and therefore prevents anaerobic root rot.

Two, three or more slices can be arranged to provide water to a plant for a more extended period of time. For example, three slices of the dimensions described can be used to extend the watering interval by a factor of three. In the case of the chrysanthemum discussed, this period would be approximately three weeks. This provides an extended watering period which is useful when a user is on vacation, for example. The use of the hydrogel foam also makes the commercial provision of flowering plants more practicable as the watering interval for maintenance is normally two to three weeks, and up to present there has been no simple and reliable way of providing watering over this time period.

An alternative way to use the water-swellable foam is to place one or more slices in the bottom of a plant pot (with or without holes in the base) in which a plant is to be potted. When using a plant pot with holes in the base, the pot can be placed on a saucer (or any other suitable container) which can be filled with water. When the plant requires water and the hydrogel foam requires hydrating, water can be added to the saucer until it no longer disappears. The absorption of water can be assessed visually by looking at the saucer.

Where the hydrogel foam is used in a plant pot without holes in the base, the condition of the plant is the best indicator if whether or not the plant requires watering. However, as before, there is an extended period of time over which plants can be recovered by watering. This period of time is significantly longer than the short period that exists for a plant that dries out under conventional watering systems. This period of time will, of course, vary depending on the type of plant in question.

### EXPERIMENTAL - POLYMER PREPARATION

Poly(ethylene glycol), PEG 8000 Standard/Pharma Grade, ex Ineos, was used as supplied. Diphenymethane-4,4'-diisocyanate (Desmodur™ CD), ex Bayer AG, supplied by Brian Jones & Associates Limited was used as supplied. This material has a functionality of 2.1 and an NCO value of 28.5-30%.

The polyisocyanate used was usually an isocyanate with functionality greater than, or equal to, 2. Compounds of this type will react with a diols (like polyethylene glycol) to produce cross-linked products, which are desirable when forming water-swellable foams. In the examples given, the isocyanate is Desmodur™ CD, which contains diphenylmethane-4,4'-diisocyanate (an aromatic diisocyanate), and which has overall functionality of approximately 2.1.

An isocyanate of functionality 2 can also be used. This being the case, it is best to add an additional compatible polyol with functionality greater than 2, for example 1,2,6-hexane triol. Additional isocyanates, and specifically aliphatic polyisocyanates, can be added to the reaction mixture to slow the rate of reaction.

The water-swellable foam was prepared according to the following procedure. PEG was weighed in a polypropylene beaker and was allowed to melt in a microwave, and then the beaker was transferred to an oven at 90°C. The beaker was then placed on a balance and tared for its weight. Appropriate quantities of dye (Fat Brown), anti-oxidant (butylated hydroxyanisole (BHA)), and diisocyanate (Desmodur™ CD) were added and the contents were stirred vigorously. The beaker was then again placed in the oven for a few minutes to cure. Alternatively, the contents can be quickly poured into a suitable mould and allowed to cure without the use of an additional heat source. Note that the polymerisation reaction is exothermic and the heat generated during the polymerisation reaction is sufficient to cure the polymer.

A few experiments were carried out using the PEG 8000 with different ash contents. The concentration of the ash of the PEG was varied by mixing a PEG batch with ash content 710 ppm and a PEG batch with ash content 150 ppm as indicated below. To reduce the variables in these experiments, the dye and the anti-oxidant were excluded. The experiments were carried out in beakers, and visual observations were recorded. The products were tested for their degree of swelling in water at ambient temperature as shown in Table 1.

**Table 1**

| PEG 8000 710 ppm | PEG 8000 150 ppm | Ash content of PEG mixture | Desmodur ™ CD | Comments | Swelling in water pph |
|---|---|---|---|---|---|
| 23.5g | 23.5g | 430 ppm | 3.0g | The reaction occurred at 90°C but the foaming was to a lower extent than obtained where the ash content of PEG was 710 ppm | 1622 |
| 10.0g | 37.0g | 269 ppm | 3.0g | The reaction at 90°C much slower than previous composition | 1075 |
| 47.0g | 0g | 710 ppm | 3.0g | The reaction occurred without placing in oven. The expansion was to a higher degree than above two compositions | Not determined usually > 10 times of dry weight. |
| 0g | 47.0g | 150 ppm | 3.0g | Did not appear to foam even at 90°C | High fragmented in water. |

Several polymerisation experiments were carried out in plastic cups to identify the level of moisture content required for a consistent quality water-swellable foam. In these experiments the ratio of PEG 8000: Desmodur™ CD was kept constant at 94:6.

Three methods of heating, i.e., oven, reactor and microwave for melting the PEG were used to investigate the effect on the resulting water-swellable foam. Exploiting the usual composition, a few experiments were carried out, and it was concluded that there is no appreciable difference in the quality, or properties of, the resulting water-swellable foam, with respect to its ability to absorb water.

When the water-swellable foam is produced in an open rectangular plastic box, a lower proportion of the material is of open cell structure. However, if the reaction mixture, after vigorous mixing by an electric mixer, is poured into a polypropylene pipe and allowed to foam within the pipe as the reaction proceeds, then the proportion of the open cell structure increases significantly. This happens when the gas (carbon dioxide), generated by the reaction of the isocyanate with water, escapes through the length of the tube, thereby causing a rupture which forms cells, and ultimately a foam. This property becomes evident when thin slices of so-formed water-swellable foam are examined - elongated capillary channels of various sizes are formed through which the free water can easily be transported. These channels simultaneously act as potential reservoirs for free water. Furthermore, these channels generate a large surface area which enhances the rate of water absorption and hence the rate of water delivery.

To make the water-swellable foam in cylindrical form, the reactants are mixed in a suitable container and poured quickly into a tubular mould that is appropriately end capped. This is to ensure that the material does not leak out. The mould is held in a vertical position until the polymerisation reaction has finished. The curing of the polymer, i.e., the completion of the reaction, is facilitated by the heat generated by the polymerisation of the reactants.

Different tubular moulds, including PVC and polypropylene moulds, were tested. The polypropylene moulds afforded a better product with respect to surface smoothness and consistency of the water-swellable foam structure. In addition, the product was removed from the mould quite easily. However, occasionally some in-homogeneous shrinkage of the polymer was observed along one dimension of the resulting product. Also, due to the physical expansion of the polymer structure when the reaction is almost complete, the end surface of the material is less smooth than the rest of the material.

The quality of the product afforded using PVC moulds was poor in respect of the surface smoothness and matrix consistency. It was also very difficult to remove the material from the mould, without cooling with liquid nitrogen, even when the interior surface of the mould was coated with mould releasing agent. It was therefore preferred to use the polypropylene moulds of one metre length with one end sealed appropriately to avoid any leaks.

To improve the aesthetic quality of the material it is also possible to incorporate any fat soluble dye or pigment dispersions in non-aqueous fluids. In addition, to improve the shelf life of the material, an antioxidant can also be added prior to the polymerisation reaction. Similarly, any nutrients, minerals, flavouring and/or scents can be mixed with the reactants to obtain beneficial effects. Moreover, some surfactants and/or blowing agents can also be used for obtaining desired properties in the material. The following examples describe the manufacture of the tubular/cylindrical form of the water-swellable foam incorporating various additives as discussed.

### Example 1

| | |
|---|---|
| PEG 8000 (molten) | = 1410g |
| BHA (antioxidant) | = 0.75g |
| Fat Brown B | = 1.5g |
| Desmodur™ CD | = 90.0g |

Molten PEG (temperature ~ 70°C) was added to a polypropylene beaker. BHA (ex Sigma Aldrich) and Fat Brown B (ex Clariant) were added to the PEG and mixed with an electric whisk. Finally, Desmodur™ CD was added and thoroughly mixed for few seconds (approximately 6 to 8 seconds) and quickly poured into a pre-warmed polypropylene mould. The mould was held vertically until the polymer cured. The product was demoulded after cooling to ambient temperature.

### Example 2

| | |
|---|---|
| PEG 8000 (molten) | = 94.0g |
| DC 57 additive (surfactant) | = 0.5g |
| Desmodur™ CD | = 6.0g |

DC 57 was added to the PEG and mixed before the addition of Desmodur™ CD, which was thoroughly mixed. The mixture was then poured into a tubular mould which was held vertically. The product was demoulded after cooling to ambient temperature.

### Example 3

| | |
|---|---|
| PEG 8000 (molten) | = 94.0g |
| DC 57 additive (surfactant) | = 0.5g |
| Solkane™ (blowing agent) | = 2.4g |
| Desmodur™ CD | = 6.0g |

The surfactant and blowing agent were mixed with PEG. The Desmodur™ CD was then added and mixed, and the resultant mixture was quickly poured into a tubular mould. The product was tapped out after cooling to ambient temperature.

### Example 4

| | |
|---|---|
| PEG 8000 (molten) | = 1410g |
| BHA | = 0.75g |
| Fat Brown B | = 1.5g |
| Perlite | = 7.0g |
| Desmodur™ CD | = 90.0g |

BHA, Fat Brown and Perlite were mixed with PEG. Desmodur™ CD was added and mixed, before the resultant mixture was poured into a mould and allowed to react and cure to afford a solid tubular product.

The swelling characteristics, i.e., the water holding capacity of the water-swellable foam (that is, when the material absorbs water to form a hydrogel foam), can be further improved by the addition of other high swelling hydrogel materials. The following tests, in which Alcosorb™ - a polyacrylamide (ex Ciba) was incorporated into the reactants before polymerisation, exemplify this. Table 2 provides the details of the reactants and the Alcosorb™ concentration within the mix, and provides the swelling data in water at ambient temperature.

The polymerisations were carried out in plastic cups and mixing was carried out by hand with the aid of a glass rod. To aid the curing, after mixing the reactants, the cups were placed in an oven at 90°C for 3 minutes.

**Table 2**

| PEG 8000 | Alcosorb™ | Desmodur™ CD | Alcosorb™ Conc | Swelling in water | State of Hydrogel |
|---|---|---|---|---|---|
| (g) | (g) | (g) | (%) | (pph) | |
| 23.80 | 0 | 1.50 | 0 | 1053 | Integral non-tacky |
| 23.53 | 0.256 | 1.50 | 1 | 1530 | Integral non-tacky |
| 23.56 | 0.513 | 1.51 | 2 | 2036 | Partially broken into pieces |

These results illustrate that the properties of the water-swellable foam can be further enhanced by the addition of additional hydrogels, or additional absorbent materials.

Further experiments were carried out to identify the lower and upper limit of moisture in the poly(ethylene glycol), PEG 8000, for the polymerisation reaction that will produce a hydrogel foam material with desirable properties.

Ten experiments were carried out in plastic cups where the ratio of PEG:Desmodur™ CD was kept constant at 94:6 weight ratio.

Table 3 indicates the quantities of the reactants used. PEG 8000 ex Ineos Oxide (~450g) was dehydrated under vacuum at 105°C for five hours using a rotary evaporator by the standard method. It is known from previous measurements by Karl Fisher Titrator that such dehydrated PEG would contain ~0.006% of the moisture. Taking this value into consideration, the quantity of water required for the given sample of the dehydrated PEG was calculated to contain a range of 0.006-5.0% moisture.

These quantities of water were accurately weighed into labelled plastic cups. The molten dehydrated PEG was then added to each of the cups and placed in an oven at 80°C. Finally, one by one, the Desmodur^{™} CD was weighed directly into the cups and mixed thoroughly with the aid of a glass rod. The cups were replaced in the oven at 80°C for 15 minutes to cure and taken out to make observations. These observations are provided in Table 4. After 24 hours, these products were demoulded and used for the swelling test.

To carry out the swelling test, the samples were separately weighed and placed in appropriately labelled large plastic beakers containing an excess of water, and were left to swell for 80 hours. Observations were made and recorded and, where possible, swelling was determined and recorded in Table 5.

**Table 3 - Quantities of the reactants used in the polymerisation**

| Cup No. | Moisture in PEG (%) | Wt of water intended (g) | Wt of water added (g) | Wt of PEG intended (g) | Wt of PEG used (g) | Desmodur™ CD intended (g) | Desmodur™ CD used (g) |
|---|---|---|---|---|---|---|---|
| 1 | 0.006 | 0 | 0 | 40.00 | 39.97 | 2.553 | 2.57 |
| 2 | 0.1 | 0.0376 | 0.037 | 40.00 | 40.03 | 2.553 | 2.59 |
| 3 | 0.2 | 0.0776 | 0.078 | 40.00 | 40.01 | 2.553 | 2.57 |
| 4 | 0.5 | 0.1976 | 0.197 | 40.00 | 40.01 | 2.553 | 2.54 |
| 5 | 1.0 | 0.3976 | 0.398 | 40.00 | 40.07 | 2.553 | 2.56 |
| 6 | 1.5 | 0.5976 | 0.598 | 40.00 | 39.98 | 2.553 | 2.60 |
| 7 | 2.0 | 0.7976 | 0.796 | 40.00 | 40.02 | 2.553 | 2.55 |
| 8 | 3.0 | 1.1976 | 1.196 | 40.00 | 40.07 | 2.553 | 2.55 |
| 9 | 4.0 | 1.5976 | 1.594 | 40.00 | 39.99 | 2.553 | 2.54 |
| 10 | 5.0 | 1.9976 | 2.002 | 40.00 | 40.01 | 2.553 | 2.56 |

**Table 4 - Visual observations made after curing for 15 minutes at 80°C, after swelling in water**

| Cup. No | Visual observations | Foam length (cm) |
|---|---|---|
| 1 | Set to glass, no foaming | 2.25 |
| 2 | Foamed and solidified | 3.5 |
| 3 | Foamed and solidified | 4.75 |
| 4 | Foamed and solidified | 7.00 |
| 5 | Not set, brittle flakes | 4.00 |
| 6 | Not set, brittle flakes | 3.5 |
| 7 | Not set, brittle flakes | 2.75 |
| 8 | Not set, brittle flakes | 2.5 |
| 9 | Not set, brittle flakes | 2.5 |
| 10 | Not set, brittle flakes | 3.0 |

**Table 5 - Data from swelling test**

| Cup No | Moisture in PEG (%) | Dry weight (g) | Swollen weight (g) | Swelling (pph) | Comments |
|---|---|---|---|---|---|
| 1 | 0.006 | 41.77 | 154.13 | 269.0 | Small part of the core unhydrated. |
| 2 | 0.1 | 41.97 | 176.00 | 319.3 | Small part of the core unhydrated. |
| 3 | 0.2 | 42.26 | 196.36 | 361.73 | Small part of the core unhydrated. |
| 4 | 0.5 | 41.67 | 628.28 | 1407.75 | Fully hydrated and fragmented into particles. |
| 5 | 1.0 | 33.15 | 288.39 | 169.9 | Fully hydrated and fragmented into particles. |
| 6 | 1.5 | 34.65 | 197.4 | 469.69 | Fully hydrated and fragmented into particles. |
| 7 | 2.0 | 39.09 | 176.3 | 351.0 | Fully hydrated and fragmented into particles. |
| 8 | 3.0 | 40.83 | 100.5 | 146.1 | Does not look like hydrogel |
| 9 | 4.0 | 41.58 | 58.3 | 40.2 | Does not look like hydrogel |
| 10 | 5.0 | 41.79 | 58.6 | 40.2 | Does not look like hydrogel |

### Conclusions

The lower limit of the moisture (in PEG 8000) suitable for the polymerisation to a foamed structure lies in the range 0.2 - 0.5% whilst the upper limit of the moisture (in PEG 8000) suitable for the polymerisation to a foamed structure lies in the range 0.5 - 1.0%.

The optimum level of moisture lies approximately in the range 0.3 - 0.5%. The required polymerisation did not occur in the samples that contained moisture of 1.0% or greater. In these particular experiments, a desired polymer structure which was significantly foamed and showed high swelling was obtained in sample 4, in which the PEG 8000 used for the preparation of the polymer contained 0.5% water.

### EXPERIMENTAL - TRIALS

The properties of the water-swellable foam, and corresponding water-swollen (hydrogel) foam, were applied to the problem of houseplant irrigation. These properties have been used to produce an innovative solution to the problem of plant watering. The material of the present invention will be referred to as the "hydrogel foam slice" for the purposes of this trial, as the water-swellable material will be used in slices, and will be hydrated.

The trials involved monitoring and comparing a range of plants, under different watering regimes: normal flood drain watering, excess watering, and watering incorporating the hydrogel foam slice in various arrangements. The aim of the trials was to extend houseplant watering up to 2 weeks.

Three trials were carried out using a range of selected popular houseplants; the plants selected were Peace Lily, Chrysanthemum, Cyclamen, Primula, Azalea, Hydrangea and Hyacinth bulbs.

The first trial was carried out to provide information on how long the plants would last after being saturated with water and then monitored for a period of two weeks.
The second trial compared plants sitting on a saturated hydrogel foam slice with control plants and with plants with an excess of water. The third trial compared control plants against plants, which were potted up containing a swollen slice inside a single plastic pot with a solid base. The information provided by the three trials mentioned above has provided data regarding the water needs of a selection of houseplants, and how best to deliver that water to a plant's roots.

The trials were structured to place the hydrogel foam slice in a range of positions and also to pit it against the common watering techniques of flood drain watering and excess free water. The results have provided an insight into how the hydrogel foam slice can be best used to increase the watering interval to a period of two weeks or more, reducing plant death and providing healthy flourishing plants.

### Trial 1: Control v Single Slice v Double Slice

Five of the most popular houseplants, peace lily, yellow chrysanthemum (Potmum Y), cyclamen, primula, red chrysanthemum (Potmum R) were selected to provide a spread of water needs.

Three specimens of each plant were selected numbered and potted up, one as a control under normal flood-drain watering conditions; the other two specimens were potted up with a hydrated hydrogel foam slice under the base of their plant pot, with root and soil contact through the drainage holes at the base of the pot. This trial was carried out using drained fully hydrated hydrogel foam slices without excess water.

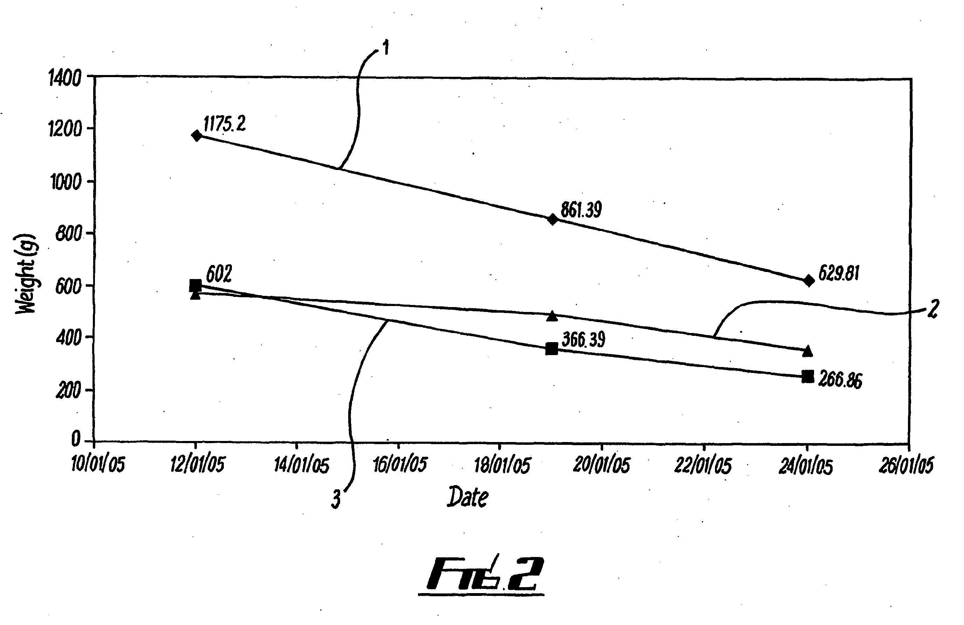

Referring to Figure 2, measurements were taken of the total weight 1 (the whole system weight), pot weight 2 (the outer pot cover and any hydrated hydrogel foam slices) and also the plant weight 3 (plant and inner pot containing drainage holes). Measurements were taken for a range of plants over the period of two weeks - the normal period for holiday watering.

The results can be used to provide information on water demand and how best to provide water at a rate sufficient to sustain healthy plants.

### Results

**Table 6 - Control v Single Slice v Double Slice**

| 12/01/2005 | | | | | |
|---|---|---|---|---|---|
| Plant Type | | Plant No | Plant wt | Pot wt | Total wt |
| Peace Lily | Control | 1 | 580.7 | 100.2 | 680.9 |
| Potmum Y | Control | 2 | 819.35 | 101.6 | 920.95 |
| Cyclamen | Control | 3 | 800 | 100.04 | 900.04 |
| Primula | Control | 4 | 724.66 | 97.58 | 822.24 |
| Potmum R | Control | 5 | 876.8 | 103.87 | 980.67 |
| Peace Lily | Slice | 6 | 533.68 | 400.69 | 934.37 |
| Potmum Y | Slice | 7 | 914.73 | 368.76 | 1283.49 |
| Cyclamen | Slice | 8 | 852.83 | 380.23 | 1233.06 |
| Primula | Slice | 9 | 694.77 | 361.68 | 1056.45 |
| Potmum R | Slice | 10 | 871.3 | 371.01 | 1242.31 |
| Peace Lily | 2xSlice | 11 | 602 | 573.2 | 1175.2 |
| Potmum Y | 2xSlice | 12 | 783.4 | 577.84 | 1361.24 |
| Cyclamen | 2xSlice | 13 | 819.04 | 511.21 | 1330.25 |
| Primula | 2xSlice | 14 | 686.48 | 551.31 | 1237.79 |
| Potmum R | 2xSlice | 15 | 858.48 | 517 | 1375.48 |
| | | | | | |

| 19/01/05 | | | | | |
|---|---|---|---|---|---|
| Plant Type | Plant No | Plant Wt | Pot Wt | Total Wt | |
| Peace Lily | 1 | 308.26 | | 408.46 | |
| Potmum Y | 2 | 522.66 | | 624.26 | |
| Cyclamen | 3 | 560.88 | | 660.92 | |
| Primula | 4 | 435.18 | | 532.76 | |
| Potmum R | 5 | 473.3 | | 577.17 | |
| Peace Lily | 6 | 295.89 | 346.15 | 642.04 | |
| Potmum Y | 7 | 635.86 | 346.14 | 982 | |
| Cyclamen | 8 | 615.37 | 340.95 | 956.32 | |
| Primula | 9 | 375.61 | 341.4 | 717.01 | |
| Potmum R | 10 | 540.06 | 361.23 | 901.29 | |
| Peace Lily | 11 | 366.39 | 495 | 861.39 | |
| Potmum Y | 12 | 536.38 | 527.98 | 1064.36 | |
| Cyclamen | 13 | 564.93 | 480.2 | 1045.13 | |
| Primula | 14 | 427.6 | 522.31 | 949.91 | |
| Potmum R | 15 | 409.77 | 476.51 | 886.28 | |
| | | | | | |

| 24/01/2005 | | | | | |
|---|---|---|---|---|---|
| Plant Type | Plant No | Total Wt | Pot Wt | Plant Wt | |
| Peace Lily | 1 | 309.1 | | 208.9 | Dead |
| Potmum Y | 2 | 496.99 | | 344.89 | Dead |
| Cyclamen | 3 | 508.65 | | 408.61 | Dead |
| Primula | 4 | 405.46 | | 307.88 | Dead |
| Potmum R | 5 | 422.87 | | 319 | Dead |
| Peace Lily | 6 | 466.52 | 223.37 | 243.15 | Dead |
| Potmum Y | 7 | 814.04 | 237.3 | 576.74 | Alive |
| Cyclamen | 8 | 791.93 | 226.96 | 564.97 | Dead |
| Primula | 9 | 553.24 | 223.38 | 329.86 | Dead |
| Potmum R | 10 | 705.44 | 250.99 | 454.45 | Dead |
| Peace Lily | 11 | 629.81 | 362.95 | 266.86 | Dead |
| Potmum Y | 12 | 841.07 | 385.06 | 456.01 | Dead |
| Cyclamen | 13 | 843.12 | 354.04 | 489.08 | Dead |
| Primula | 14 | 773.95 | 399.58 | 374.37 | Dead |
| Potmum R | 15 | 693.17 | 357.68 | 335.49 | Dead |

The plant weights after two weeks are all higher than the controls (no hydrogel foam slices) demonstrating that the available water is higher with the hydrogel foam slices at this time. The deaths of the hydrogel foam slice containing plants occurred from two to four days after the control. From these results the healthy weekly water requirement of the various plants was calculated. The results allow conclusions to be drawn on whether the water loss is mainly from the plant (plant weight includes all soil and plastic pot) or from the hydrated hydrogel foam slice.

Referring again to Figure 2, the ideal result would show little change with time of the plant weight 3 but water loss from the pot weight 2, which includes the hydrated hydrogel foam slice and outer pot cover. The effect of two hydrogel foam slices, instead of one hydrogel foam slice, is a higher plant weight 3 on final measurement, demonstrating the beneficial effect on pot water content of an increased number of hydrogel foam slices. This beneficial effect comes from the bound water (molecular and capillary) in the hydrated hydrogel foam slice, and is most useful in delaying plant death from lack of moisture.

Figure 2 shows that the pot weight has decreased less than the plant weight during the first week and an equal amount during the second week, when the plant is beginning to 'pull' more from the hydrated hydrogel foam slice as the relative humidity in the growing medium of the plant drops to below that of the hydrated hydrogel foam slice. This illustrates that the hydrogel foam slice is triggered into its life saving action by the needs of the plant. This is enough to sustain lower water demand plants.

### Conclusion

Using the information gathered, it was then possible, to calculate the average weekly water transpiration for each type of plant used in the study. Table 7 below shows that there is a marked difference in water need for a selection of normal houseplants. It is well known that plants in full flower need more water to sustain their blooms. It can be seen from Table 6 that in full flower some plants require up to half a litre of water per week. The hydrogel foam material of the present invention can provide this watering for plants that have differing watering needs.

**Table 7: Weekly Transpiration of Selected Houseplants**

| Houseplant Type | Average Water per week (ml) |
|---|---|
| Peace Lily | 250 |
| Cyclamen | 245 |
| Primula | 300 |
| Crysanthemum | 270 |
| Azalea | 500 |
| Hydrangea | 300 |
| Hyacinth Bulb | 100 |

### Trial 2: Control v Free Water v Hydrogel foam Slice

Three specimens of the five most popular houseplants were selected, numbered and potted up. One specimen of each type was selected as a control under normal flood-drain watering conditions; one specimen of each type was selected and watered under a free water regime, and the remaining specimens were potted up with a hydrated hydrogel foam slice under the base of their plant pot, with root and soil contact through the drainage holes at the base of the pot. This trial was carried out using drained fully hydrated hydrogel foam slices without excess water. Flood-drain watering involves immersing the plant pot containing a plant in water for several hours. After this time, the plant pot and plant are removed and allowed to drain freely until no more water drains out. It is then left for a defined period of days or weeks before repeating. In contrast, a free watering regime involves watering the plant whenever it looks as though it requires watering. The quantity of water given is at the discretion of the person watering the plant.

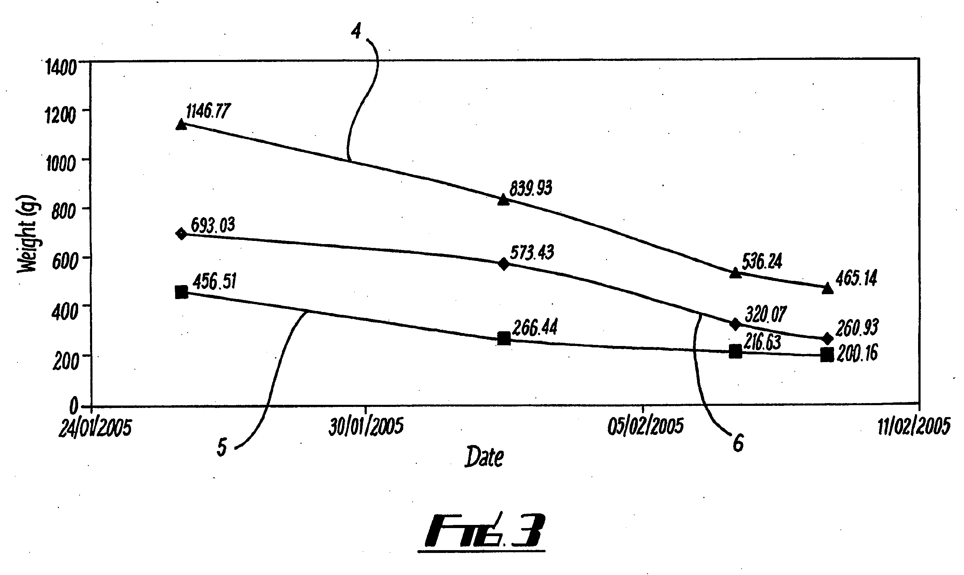

Referring to Figure 3, measurements were again taken of the total weight 4 - the whole system weight, pot weight 5 - the outer pot cover and any swollen slices, and also the plant weight 6 - plant and inner pot containing drainage holes. Measurements were taken for a range of plants over the period of two weeks the normal period for holiday watering.

The results can be used to provide information on how to tailor the use of the hydrated hydrogel foam slice to provide water to the plants roots over a sustainable holiday period.

### Results

**Table 8: Control v Free Water v Hydrogel foam Slice**

| 26/01/2005 | | | | | |
|---|---|---|---|---|---|
| Plant Type | Plant No | | Plant Wt | Pot/slice Wt | Total Wt |
| Azalea | 1A | Control | 636.14 | | 730.27 |
| Primula | 2A | Control | 706.8 | | 811.4 |
| Hydrangea | 3A | Control | 477.1 | | 578.3 |
| Bulbs | 4A | Control | 657 | | 753 |
| Peace Lily | 5A | Control | 723.45 | | 823.53 |
| Azalea | 6A | Free water | 646.77 | 350 | 1053.83 |
| Primula | 7A | Free water | 677.7 | 350 | 1028.8 |
| Hydrangea | 8A | Free water | 491.4 | 350 | 854.3 |
| Bulbs | 9A | Free water | 663.75 | 350 | 1014.8 |
| Peace Lily | 10A | Free water | 685.5 | 350 | 1030.06 |
| Azalea | 11A | Slice | 648.66 | 485.7 | 1142.4 |
| Primula | 12A | Slice | 730.32 | 478.8 | 1209.9 |
| Hydrangea | 13A | Slice | 510 | 505.13 | 1016 |
| Bulbs | 14A | Slice | 662.92 | 497.5 | 1157.85 |
| Peace Lily | 15A | Slice | 693.03 | 456.51 | 1146.77 |
| | | | | | |

| 02/02/2005 | | | | | |
|---|---|---|---|---|---|
| Plant Type | Plant No | Plant Wt | Total Wt | | |
| Azalea | 1A | 183.4 | 278.17 | Dead | |
| Primula | 2A | 455.69 | 556.64 | | |
| Hydrangea | 3A | 179.57 | 279.52 | Dead | |
| Bulbs | 4A | 561.75 | 655.9 | | |
| Peace Lily | 5A | 373.75 | 473.75 | | |
| Azalea | 6A | 415.2 | 513.65 | | |
| Primula | 7A | 710 | 872.52 | | |
| Hydrangea | 8A | 485.77 | 586.94 | | |
| Bulbs | 9A | 732 | 911.71 | | |
| Peace Lily | 10A | 656.55 | 756.03 | | |
| Azalea | 11A | 253 | 484.94 | | |
| Primula | 12A | 713.44 | 1014.87 | | |
| Hydrangea | 13A | 399.95 | 669.89 | | |
| Bulbs | 14A | 698.68 | 1029.58 | | |
| Peace Lily | 15A | 573.43 | 839.93 | | |
| | | | | | |

| 07/02/2005 | | | | | |
|---|---|---|---|---|---|
| Plant Type | Plant No | Plant Wt | Pot/slice Wt | Total Wt | |
| Azalea | 1A | 132.24 | | 226.38 | DEAD |
| Primula | 2A | 285.42 | | 385.32 | |
| Hydrangea | 3A | 126.13 | | 226.03 | DEAD |
| Bulbs | 4A | 457.05 | | 551.2 | |
| Peace Lily | 5A | 218.38 | | 321.06 | DEAD |
| Azalea | 6A | 157.53 | 98.34 | 255.87 | DEAD |
| Primula | 7A | 634.71 | 98.52 | 733.22 | |
| Hydrangea | 8A | 267.27 | 98.9 | 366.16 | |
| Bulbs | 9A | 691.8 | 99.17 | 790.97 | |
| Peace Lily | 10A | 380.84 | 99 | 480.08 | |
| Azalea | 11A | 142.81 | 197.92 | 340.75 | DEAD |
| Primula | 12A | 612.73 | 242.61 | 855.36 | |
| Hydrangea | 13A | 185.18 | 233.7 | 418.86 | DEAD |
| Bulbs | 14A | 629.36 | 260.77 | 890.12 | |
| Peace Lily | 15A | 320.07 | 216.63 | 536.24 | |
| | | | | | |

| 09/02/2005 | | | | | |
|---|---|---|---|---|---|
| Plant Type | Plant No | Plant Wt | Pot/slice Wt | Total Wt | |
| Azalea | 1A | 128.53 | | 222.75 | DEAD |
| Primula | 2A | 261.2 | | 361.12 | DEAD |
| Hydrangea | 3A | 116.82 | | 261.75 | DEAD |
| Bulbs | 4A | 428.77 | | 522.91 | |
| Peace Lily | 5A | 195.34 | | 301.22 | DEAD |
| Azalea | 6A | 145.59 | 98.34 | 243.94 | DEAD |
| Primula | 7A | 590.1 | 98.52 | 688.85 | |
| Hydrangea | 8A | 208.91 | 98.9 | 307.78 | DYING |
| Bulbs | 9A | 648.32 | 99.17 | 746.91 | |
| Peace Lily | 10A | 303.7 | 99 | 402.94 | |
| Azalea | 11A | 138.62 | 138.62 | 325.47 | DEAD |
| Primula | 12A | 575.77 | 200.77 | 810.35 | |
| Hydrangea | 13A | 159.39 | 159.39 | 382.67 | DEAD |
| Bulbs | 14A | 585.88 | 235.88 | 836.81 | |
| Peace Lily | 15A | 260.93 | 200.93 | 465.14 | |

The data shown above in Table 8 demonstrates that a variety of plants will survive one week watering intervals using the hydrogel foam slice watering system. The two types of control plants, which were in full flower and which have a high water demand, died suddenly within the first week. The hydrogel foam slice enabled these plants to survive for an additional five days by using the bound water (molecular and capillary), in the hydrated hydrogel foam slice, to supply moisture to the plants.

At the end of two weeks, four out of five of the control plants had perished, whereas only the two high water demand plants (azalea and hydrangea) had died using the hydrogel foam.slice. As can been seen, even the addition of 250ml of excess free water is insufficient for these high demand plants.

### Conclusion

Referring again to Figure 3, it is shown that during the first week the plant weight plot 6 is much closer to the ideal flat profile that indicates that the plant remains fully hydrated. The pot weight plot 5 is much closer to the profile of the total weight 4, which indicates that during the first week the majority of the water needed to sustain the plant was provided from the hydrogel foam slice and the free water provided.

As the trial moved into its second week this water reservoir was used up and the soil began to dry.
The hydrogel foam slice enabled the healthy survival of three plants (peace lily, bulbs and primula) through a normal fortnightly holiday period.

### Trial 3: Control v Potted up Hydrogel foam Slice

Using the data collected in the previous trials two plants were selected. Azaleas and hyacinth bulbs were the two plants selected, as they were the highest and lowest water demand plants on trial, respectively. Three specimens of each plant were selected numbered and potted up. One pair were set up as a control under normal flood-drain watering conditions; the second and third pair were potted up containing a hydrated hydrogel foam slice and added free water, which was recorded for the purposes of the trial. The plants were monitored for a fortnight.

The measurements taken were the total weight - weight of the entire system, and in the case of the controls, pot weight - weight of the plant and inner pot containing drainage holes. These measurements were taken to show that the ideal pattern of free and bound water from the hydrated hydrogel foam slice were in tandem sufficient to keep plants healthy and flourishing..

### Results

**Table 9: Control v Potted up Hydrogel foam Slice**

| 02/02/2005 | | | |
|---|---|---|---|
| | Plant Code | Pot wt | Total Wt |
| Azalea | A (control) | 100.97 | 782.24 |
| Azalea | B (slice) | 624 | 1656.6 |
| Azalea | C (slice) | 654.79 | 1655.29 |
| Bulbs | D (control) | 101.57 | 1112.76 |
| Bulbs | E (slice) | 613.41 | 1712.46 |
| Bulbs | F (slice) | 593.33 | 1768.02 |
| | | | |

| 07/02/2005 | | | |
|---|---|---|---|
| Plant Code | Pot wt | Total Wt | |
| A | 99.91 | 310.86 | DEAD |
| B | | 1342.49 | |
| C | | 1367.57 | |
| D | 164.21 | 1016.87 | |
| E | | 1706.6 | |
| F | | 1671.32 | |
| | | | |

| 09/02/2005 | | | |
|---|---|---|---|
| Plant Code | Pot wt | Total Wt | |
| A | 99.93 | 243.29 | DEAD |
| B | | 1155.74 | 900ml added |
| C | | 1163.47 | 500ml added |
| D | 142.13 | 945.37 | |
| E | | 1610.41 | |
| F | | 1579.56 | |

| 14/02/2005 | | | |
|---|---|---|---|
| Plant Code | Pot wt | Total Wt | |
| A | 99.93 | DEAD | DEAD |
| B | | 1705 | |
| C | | 1290 | |
| D | 135 | 830 | |
| E | | 1480 | |
| F | | 1435 | |
| | | | |

| 17/02/2005 | | | |
|---|---|---|---|
| Plant Code | Pot wt | Total Wt | |
| A | | | DEAD |
| B | | 1430 | |
| C | | 1115 | |
| D | 135 | 745 | |
| E | | 1375 | |
| F | | 1310 | |

### Conclusion

The results above in Table 9 show that, as expected, the flood drain watered Azalea died after three days, while the identical plants which contained a hydrated hydrogel foam slice in the base of the planter lasted one week before showing signs of needing water. At this point, 900ml of water was added to Plant B and 500ml of water was added to Plant C; the plants then lasted for an additional fourteen and ten days respectively before needing additional water. This demonstrates that the addition of a hydrated hydrogel foam slice and half a litre of free water is sufficient to keep even the highest water demand plants in full flower for a period of three to five times more than is achievable by standard flood drain watering.

Hyacinth Bulbs tested were seen to need the least water per week, the addition of a hydrated hydrogel foam slice plus half a litre of water was sufficient to keep the bulbs healthy from their purchase to the end of their flowering cycle. The control also managed to produce flowers but these were of poorer quality and perished quickly.

Additional results from the trials carried out are discussed below.

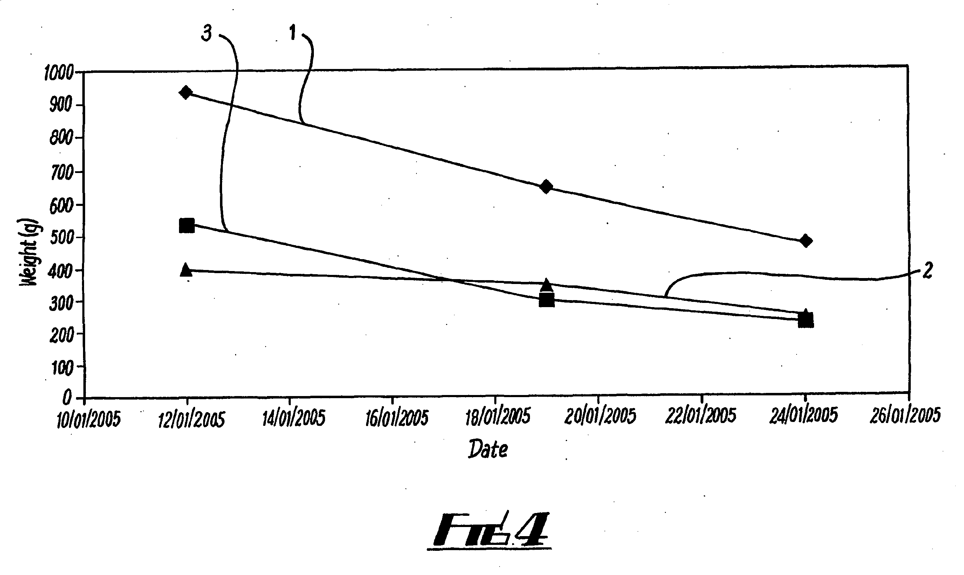

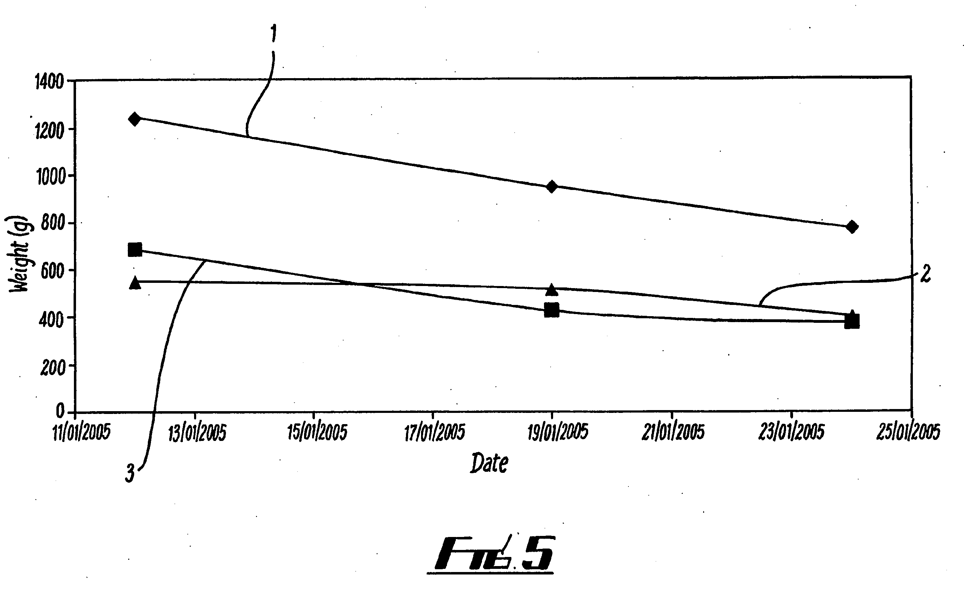

Referring to Figures 4 and 5, the graphs, taken from Trial 1, of a Potmum Red and a Primula show that the pot weight 2 has decreased less than the plant weight 3. The ideal plot would show a constant plant weight 3 and a fluctuation in the pot weight 2 similar to that in the total weight 1. The closer the weight loss profile of the pot weight 2 mimics that of the total weight 1 then the closer to the ideal. As was mentioned earlier, the addition of free water to the hydrogel foam slice, in addition to bound water, enables the plant to take up any moisture needed quickly. Therefore the ideal watering method is to add both a hydrogel foam slice and free water.

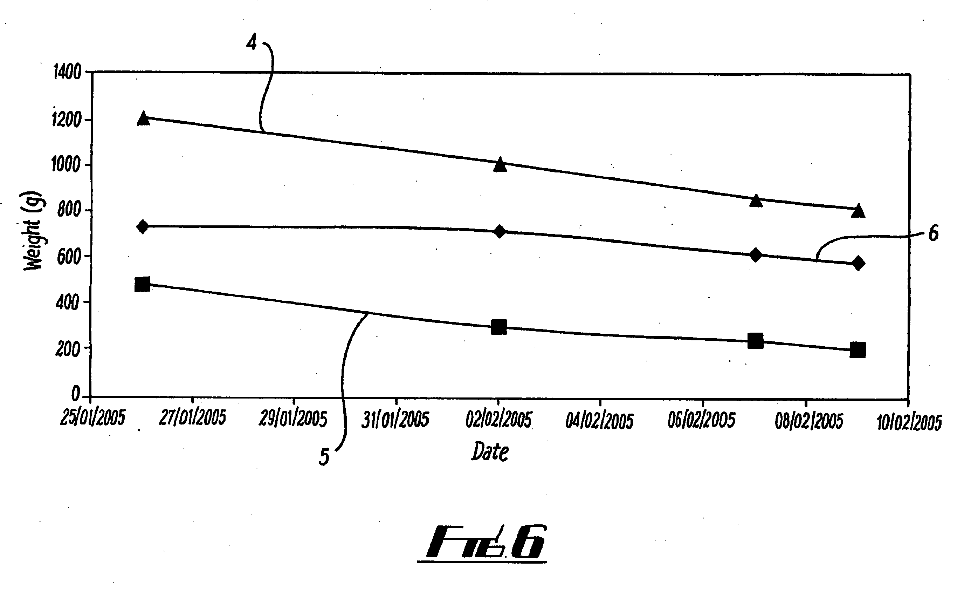

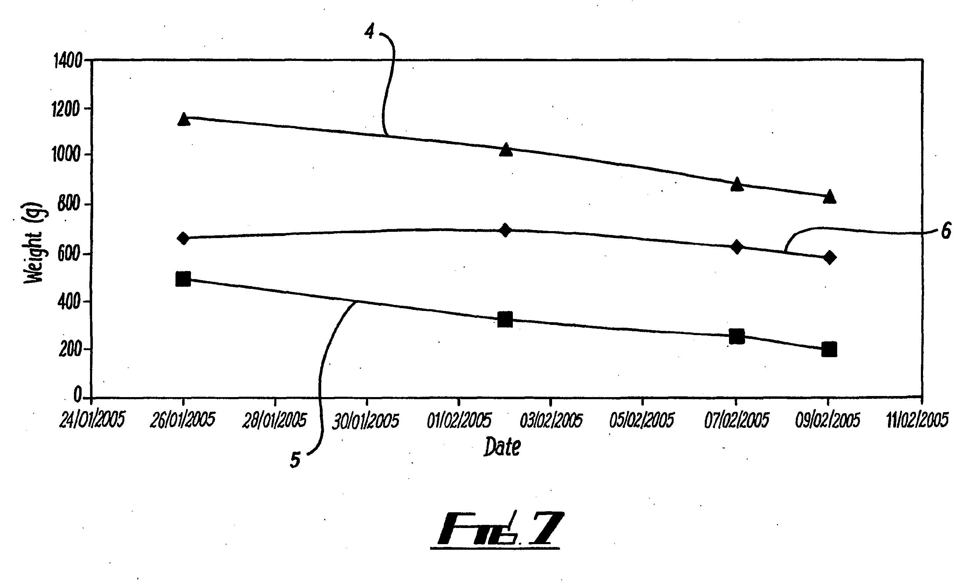

Referring now to Figures 6 and 7, the graphs are taken from Trial 2. Primula and Hydrangea bulbs show that when even a small quantity of free water is added, in this case 100ml, in conjunction with the hydrogel foam slice, a profile closer to the ideal, with similar total weight 4 and pot weight 5 losses and a flat plant weight 6, is found for a period of time. This indicates that with the addition of free water and a hydrated hydrogel foam slice, a plant can be left untended for two weeks or more. With re-watering to just above the hydrogel foam slice whenever the free water level drops, plants can be kept healthy and may flourish for an elongated period of time.

From the results of the trials, the following conclusions can be drawn. When the hydrogel foam slice is hydrated and covered with excess free water, and a potted plant is placed on top of it (providing it has holes in the base of the pot) the hydrated hydrogel foam slice will provide free water on demand and will extend the watering interval to a two week period.

Re-watering in the first case should take place when the user feels the soil is dry. At this point, in the region of 500ml of water should be added to the system and this should be repeated whenever the soil dries. The re-watering interval should be easy to judge, as there is an obvious visual indicator. When the free water surrounding the hydrogel foam slice has been exhausted, the water should be added to above the level of the hydrogel foam slice - this will re-invigorate both the soil and the hydrogel foam slice.

The hydrated hydrogel foam slice has the dual benefits of protecting the plant against both under and over watering. It will provide an excess supply of water to guard against under watering. Simultaneously, the hydrogel foam slice will provide protection for the roots against being damaged by contact with free water. This can frequently lead to a lack of oxygen and an increase in anaerobic bacteria, which leads to rotting of the roots (root rot).

The material of the present invention, among other things, provides a watering system which will allow sales outlets for pot plants to guarantee the life expectation of the plants they sell.. The ability to guarantee an extended lifetime or flowering period will be of major benefit to such outlets and their customers alike.

The properties of the present invention will also benefit professional and amateur plant growers, and will particularly benefit nurseries in terms of water economy and in terms of allowing then to sell on plants earlier in their development, whilst still being able to guarantee that the plants will be in good order on delivery to sales outlets. Indeed, in very small pots it is almost impossible to provide enough water in the growing medium used, and such plants often die soon after purchase. A small hydrated hydrogel foam slice placed in the bottom of the pot readily solves this problem by greatly increasing the amount of water that can be made available to such plants contained in very small pots.

The material of the present invention has many other horticultural applications amongst which are the growing of plants in tall towers with holes on the vertical surfaces, where slices of hydrogel foam can be placed in any chosen number, and at any chosen height; the maintenance of herbs; the growing of crops such as tomatoes, peppers and cucumbers; the growing of medicinal plants; hydroponics and many other configurations and varieties of plant.

### Industrial Applicability

In addition the material of the present invention may have applications outside the field of horticulture such as in the field of oil and gas exploration (for example, as a drilling mud) or in the field of medicine and healthcare (for example, as a reservoir for collecting urine or other suitable liquids).

## Claims

1. A hydratable water-swellable polymer material that forms a hydrogel on absorption of water, said polymer material comprising a polyurethane polymer network for releasably retaining water, wherein the polyurethane polymer network comprises at least a proportion of available hydroxyl groups and wherein the material comprises units of the following formulae:
-CONH-X-NHCO-O-(CH₂CH₂O-)ₙ-;
-CO-X-CO-O-(CH₂CH₂O-)ₙ-;
-(CH₂CH₂O-)ₙ-(CONH-[X-NHCONH]ₘ)-; and
-X-(CH₂CH₂O-)ₙ-CH₂CH₂OH
wherein n is an integer from 100 to 300, and m is an integer of any value greater than or equal to unity, X comprises an aliphatic or aromatic di- or multi-functional unit, and wherein in at least some units X has a functionality greater than two.

2. A polymer material as claimed in Claim 1, wherein the available hydroxyl groups are polyol hydroxyl groups attached to the polyurethane polymer network.

3. A polymer material as claimed in Claims 1 or 2, wherein the ratio of available hydroxyl groups to urea and/or urethane bonds is approximately 1 to 3.

4. A polymer material as claimed in any preceding Claim, wherein the material comprises a substantially porous structure.

5. A polymer material as claimed in Claim 4, wherein the substantially porous structure is a foam.

6. A polymer material as claimed in Claim 5, wherein the foam comprises approximately 5% to 95% porosity by volume.

7. A polymer material as claimed in Claim 5, wherein the foam comprises approximately 10% to 90% porosity by volume.

8. A polymer material as claimed in Claim 5, wherein the foam comprises approximately 20% to 80% porosity by volume.

9. A polymer material as claimed in Claim 5, wherein the foam comprises approximately 50% porosity by volume.

10. A polymer material as claimed in Claims 5 to 9, wherein the foam comprises a substantially open cell structure.

11. A polymer material as claimed in Claim 10, wherein the proportion of open cells is at least about 50%.

12. A polymer material as claimed in Claim 10, wherein the proportion of open cells is approximately 50%.

13. A polymer material as claimed in Claims 5 to 12, wherein the foam comprises at least a proportion of closed cell structures.

14. A polymer material as claimed in Claims 5 to 13, wherein the foam comprises a plurality of continuous channels that extend from at least a first point on at least one exterior surface of the foam to at least a second point on at least one exterior surface of the foam.

15. A polymer material as claimed in Claims 5 to 14, wherein the foam comprises a plurality of continuous channels that extend from cells within the foam to at least one point on at least one exterior surface of the foam.

16. A polymer material as claimed in any preceding Claim, wherein the polymer materials comprises at least one additive.

17. A polymer material as claimed in Claim 16, wherein the at least one additive comprises a water-swellable material.

18. A polymer material as claimed in Claim 16, wherein the at least one additive comprises a plant nutrient.

19. A polymer material as claimed in Claim 16, wherein the at least one additive comprises an anti-oxidant.

20. A polymer material as claimed in Claim 19, wherein the polymer material can absorb molecularly bound water.

21. A polymer material as claimed in Claims 19 or 20, wherein the polymer material can absorb capillary water.

22. A polymer material as claimed in Claims 19 to 22, wherein the polymer material can absorb free liquid water.

23. A hydratable water-swellable polymer material preparation method, said polymer material forming a hydrogel on absorption of water, the method comprising the step of reacting at least one polyol with at least one isocyanate, wherein sufficient polyol hydroxyl groups react to form a polyurethane polymer network, and wherein at least a proportion of available polyol hydroxyl groups remain unreacted and wherein the polyol comprises polyethylene glycol having a number average molecular mass between 5000 and 20000 Da.

24. A method for preparing a polymer material as claimed in Claim 23, wherein approximately 25% of the polyol hydroxyl groups remain unreacted.

25. A method for preparing a polymer material as claimed in Claims 23 or 24, wherein the method further comprises the step of providing a means for producing a foam.

26. A method for preparing a polymer material as claimed in Claim 25, wherein the means for producing a foam comprises water.

27. A method for preparing a polymer material as claimed in Claim 25 or 26, wherein sufficient weight of foaming or frothing agent is provided to produce a foam.

28. A method for preparing a polymer material as claimed in Claim 26 or 27, wherein the relative ratio of polyol hydroxyl groups to isocyanate groups is approximately OH:NCO, 1.0:2.0 and the relative ratio of water molecules is in the range 0.4 to 2.4.

29. A method for preparing a polymer material as claimed in Claims 23 to 28, wherein the isocyanate is an aromatic polyisocyanate with functionality greater than or equal to 2.

30. A method for preparing a polymer material as claimed in Claim 23, wherein the polyethylene glycol has a number average molecular mass between 6000 and 9000 Da.

31. A method for preparing a polymer material as claimed in Claims 23 to 30, wherein the method further comprises the step of adding at least one disparate polyol.

32. A method for preparing a polymer material as claimed in Claim 31, wherein the at least one disparate polyol is polypropylene glycol.

33. A method for preparing a polymer material as claimed in Claims 23 to 32, wherein the reaction is carried out at sufficient temperature to form a polymer network.

34. A method for preparing a polymer material as claimed in Claim 33, wherein the temperature is between approximately 70 °C and approximately 130 °C.

35. A method for preparing a polymer material as claimed in Claim 33, wherein the temperature is between approximately 80 °C and approximately 100 °C.

36. A method for preparing a polymer material as claimed in Claims 23 to 35, wherein the method further comprises the step of providing at least one catalyst.

37. A method for preparing a polymer material as claimed in Claims 23 to 36, wherein the method further comprises the step of adding at least one disparate water-swellable material.

38. A method for preparing a polymer material as claimed in Claims 23 to 37, wherein the method further comprises the step of adding at least one plant nutrient.

39. A method for preparing a polymer material as claimed in Claims 23 to 38, wherein the method further comprises the step of adding at least one anti-oxidant.

40. A polymer material produced by the method of Claims 23 to 39.

41. A potting composition for plants comprising a polymer according to any one of Claims 1 to 22 or 40.

42. A cultivation medium for plants comprising a polymer according to any one of Claims 1 to 22 or 40.

43. A package for transporting plants comprising a vessel for receiving the root or root ball of a plant, the said vessel containing a quantity of a polymer according to any one of Claims 1 to 22 or 40.

44. A package according to Claim 43, wherein the package also contains a potting composition or growth medium, optionally containing soluble plant nutrients.

45. A package according to Claim 44, wherein the polymer is pre-hydrated with an aqueous solution containing essential plant nutrients.

46. A method of stabilising water availability for a plant, comprising introducing a polymer according to any one of Claims 1 to 22 or 40 to a potting composition or cultivation medium, and hydrating the polymer.

47. A method according to Claim 46, wherein the polymer is added to a potting composition, or cultivation medium, after hydration of the polymer.

48. A method according to Claim 46, wherein the polymer is added to a potting composition, or cultivation medium, before hydration of the polymer.

49. A method according to either of Claims 47 or 48, wherein the polymer is hydrated with an aqueous solution containing essential plant nutrients.

50. A hydratable water-swellable hydrogel polymer material in the xerogel state, said polymer material comprising a polyurethane polymer network for releasably retaining water, wherein the polyurethane polymer network comprises at least a proportion of available hydroxyl groups and wherein the material comprises units of the following formulae:
-CONH-X-NHCO-O-(CH₂CH₂O-)ₙ-;
-CO-X-CO-O-(CH₂CH₂O-)ₙ-;
-(CH₂CH₂O-)ₙ-(CONH-[X-NHCONH]ₘ)-; and
-X-(CH₂CH₂O-)ₙ-CH₂CH₂OH
wherein n is an integer from 100 to 300, and m is an integer of any value greater than or equal to unity, X comprises an aliphatic or aromatic di- or multi-functional unit, and wherein in at least some units X has a functionality greater than two.

## Patentansprüche

1. Ein hydratisierbares wasserquellbares Polymermaterial, das bei Absorption von Wasser ein Hydrogel bildet, wobei das Polymermaterial ein Polyurethanpolymernetzwerk zum abgebbaren Halten von Wasser beinhaltet, wobei das Polyurethanpolymernetzwerk mindestens einen Anteil an verfügbaren Hydroxylgruppen beinhaltet und wobei das Material Einheiten der folgenden Formeln beinhaltet:
-CONH-X-NHCO-O-(CH₂CH₂O-)ₙ-;
-CO-X-CO-O-(CH₂CH₂O-)ₙ-;
-(CH₂CH₂O-)ₙ-(CONH-[X-NHCONH]ₘ)-; und
-X-(CH₂CH₂O-)ₙ-CH₂CH₂OH
wobei n eine ganze Zahl von 100 bis 300 ist und m eine ganze Zahl eines beliebigen Werts von mehr als oder gleich eins ist, X eine aliphatische oder aromatische di- oder multifunktionelle Einheit beinhaltet und wobei in mindestens manchen Einheiten X eine Funktionalität von mehr als zwei aufweist.

2. Polymermaterial gemäß Anspruch 1, wobei die verfügbaren Hydroxylgruppen an dem Polyurethanpolymernetzwerk angelagerte Polyolhydroxylgruppen sind.

3. Polymermaterial gemäß den Ansprüchen 1 oder 2, wobei das Verhältnis von verfügbaren Hydroxylgruppen zu Urea- und/oder Urethanbindungen etwa 1 zu 3 beträgt.

4. Polymermaterial gemäß einem der vorhergehenden Ansprüche, wobei das Material eine im Wesentlichen poröse Struktur beinhaltet.

5. Polymermaterial gemäß Anspruch 4, wobei die im Wesentlichen poröse Struktur ein Schaum ist.

6. Polymermaterial gemäß Anspruch 5, wobei der Schaum etwa 5 % bis 95 % Volumenporosität beinhaltet.

7. Polymermaterial gemäß Anspruch 5, wobei der Schaum etwa 10 % bis 90 % Volumenporosität beinhaltet.

8. Polymermaterial gemäß Anspruch 5, wobei der Schaum etwa 20 % bis 80 % Volumenporosität beinhaltet.

9. Polymermaterial gemäß Anspruch 5, wobei der Schaum etwa 50 % Volumenporosität beinhaltet.

10. Polymermaterial gemäß den Ansprüchen 5 bis 9, wobei der Schaum eine im Wesentlichen offene Zellstruktur beinhaltet.

11. Polymermaterial gemäß Anspruch 10, wobei der Anteil an offenen Zellen mindestens etwa 50 % beträgt.

12. Polymermaterial gemäß Anspruch 10, wobei der Anteil an offenen Zellen etwa 50 % beträgt.

13. Polymermaterial gemäß den Ansprüchen 5 bis 12, wobei der Schaum mindestens einen Anteil an geschlossenen Zellstrukturen beinhaltet.

14. Polymermaterial gemäß den Ansprüchen 5 bis 13, wobei der Schaum eine Vielzahl von kontinuierlichen Kanälen beinhaltet, die sich von mindestens einem ersten Punkt an mindestens einer äußeren Oberfläche des Schaums zu mindestens einem zweien Punkt an mindestens einer äußeren Oberfläche des Schaums erstrecken.

15. Polymermaterial gemäß den Ansprüchen 5 bis 14, wobei der Schaum eine Vielzahl von kontinuierlichen Kanälen beinhaltet, die sich von Zellen innerhalb des Schaums zu mindestens einem Punkt an mindestens einer äußeren Oberfläche des Schaums erstrecken.

16. Polymermaterial gemäß einem der vorhergehenden Ansprüche, wobei das Polymermaterial mindestens einen Zusatz beinhaltet.

17. Polymermaterial gemäß Anspruch 16, wobei der mindestens eine Zusatz ein wasserquellbares Material beinhaltet.

18. Polymermaterial gemäß Anspruch 16, wobei der mindestens eine Zusatz einen Pflanzennährstoff beinhaltet.

19. Polymermaterial gemäß Anspruch 16, wobei der mindestens eine Zusatz ein Antioxidationsmittel beinhaltet.

20. Polymermaterial gemäß Anspruch 19, wobei das Polymermaterial molekular gebundenes Wasser absorbieren kann.

21. Polymermaterial gemäß den Ansprüchen 19 oder 20, wobei das Polymermaterial Kapillarwasser absorbieren kann.

22. Polymermaterial gemäß den Ansprüchen 19 bis 22, wobei das Polymermaterial freies flüssiges Wasser absorbieren kann.

23. Ein Verfahren zur Zubereitung eines hydratisierbaren wasserquellbaren Polymermaterials, wobei das Polymermaterial bei Absorption von Wasser ein Hydrogel bildet, wobei das Verfahren den Schritt des Reagierenlassens mindestens eines Polyols mit mindestens einem Isocyanat beinhaltet, wobei ausreichend Polyolhydroxylgruppen reagieren, um ein Polyurethanpolymernetzwerk zu bilden, und wobei mindestens ein Anteil an verfügbaren Polyolhydroxylgruppen **unreagiert** bleibt und wobei das Polyol Polyethylenglycol mit einer zahlenmittleren Molekularmasse zwischen 5000 und 20000 Da beinhaltet.

24. Verfahren zum Zubereiten eines Polymermaterials gemäß Anspruch 23, wobei etwa 25 % der Polyolhydroxylgruppen unreagiert bleiben.

25. Verfahren zum Zubereiten eines Polymermaterials gemäß den Ansprüchen 23 oder 24, wobei das Verfahren ferner den Schritt des Bereitstellens eines Mittels zum Herstellen eines Schaums beinhaltet.

26. Verfahren zum Zubereiten eines Polymermaterials gemäß Anspruch 25, wobei das Mittel zum Herstellen eines Schaums Wasser beinhaltet.

27. Verfahren zum Zubereiten eines Polymermaterials gemäß den Ansprüchen 25 oder 26, wobei ausreichend Masse an Schäum- oder Aufschäummittel zum Herstellen eines Schaums bereitgestellt wird.

28. Verfahren zum Zubereiten eines Polymermaterials gemäß den Ansprüchen 26 oder 27, wobei das relative Verhältnis von Polyolhydroxylgruppen zu Isocyanatgruppen etwa OH:NCO, 1,0:2,0 beträgt und das relative Verhältnis von Wassermolekülen im Bereich von 0,4 bis 2,4 liegt.

29. Verfahren zum Zubereiten eines Polymermaterials gemäß den Ansprüchen 23 bis 28, wobei das Isocyanat ein aromatisches Polyisocyanat mit einer Funktionalität von mehr als oder gleich 2 ist.

30. Verfahren zum Zubereiten eines Polymermaterials gemäß Anspruch 23, wobei das Polyethylenglycol eine zahlenmittlere Molekularmasse zwischen 6000 und 9000 Da aufweist.

31. Verfahren zum Zubereiten eines Polymermaterials gemäß den Ansprüchen 23 bis 30, wobei das Verfahren ferner den Schritt des Zugebens mindestens eines disparaten Polyols beinhaltet.

32. Verfahren zum Zubereiten eines Polymermaterials gemäß Anspruch 31, wobei das mindestens eine disparate Polyol Polypropylenglycol ist.

33. Verfahren zum Zubereiten eines Polymermaterials gemäß den Ansprüchen 23 bis 32, wobei die Reaktion bei einer ausreichenden Temperatur zum Bilden eines Polymernetzwerks durchgeführt wird.

34. Verfahren zum Zubereiten eines Polymermaterials gemäß Anspruch 33, wobei die Temperatur zwischen etwa 70 °C und etwa 130 °C liegt.

35. Verfahren zum Zubereiten eines Polymermaterials gemäß Anspruch 33, wobei die Temperatur zwischen etwa 80 °C und etwa 100 °C liegt.

36. Verfahren zum Zubereiten eines Polymermaterials gemäß den Ansprüchen 23 bis 35, wobei das Verfahren ferner den Schritt des Bereitstellens mindestens eines Katalysators beinhaltet.

37. Verfahren zum Zubereiten eines Polymermaterials gemäß den Ansprüchen 23 bis 36, wobei das Verfahren ferner den Schritt des Zugebens mindestens eines disparaten wasserquellbaren Materials beinhaltet.

38. Verfahren zum Zubereiten eines Polymermaterials gemäß den Ansprüchen 23 bis 37, wobei das Verfahren ferner den Schritt des Zugebens mindestens eines Pflanzennährstoffs beinhaltet.

39. Verfahren zum Zubereiten eines Polymermaterials gemäß den Ansprüchen 23 bis 38, wobei das Verfahren ferner den Schritt des Zugebens mindestens eines Antioxidationsmittels beinhaltet.

40. Ein Polymermaterial, hergestellt durch das Verfahren gemäß den Ansprüchen 23 bis 39.

41. Eine Anzuchtzusammensetzung für Pflanzen, die ein Polymer gemäß einem der Ansprüche 1 bis 22 oder 40 beinhaltet.

42. Ein Kulturmedium für Pflanzen, das ein Polymer gemäß einem der Ansprüche 1 bis 22 oder 40 beinhaltet.

43. Eine Verpackung zum Transportieren von Pflanzen, die ein Gefäß zum Aufnehmen der Wurzel oder des Wurzelballens einer Pflanze beinhaltet, wobei das Gefäß eine Menge eines Polymers gemäß einem der Ansprüche 1 bis 22 oder 40 enthält.

44. Verpackung gemäß Anspruch 43, wobei die Verpackung auch eine Anzuchtzusammensetzung oder ein Wachstumsmedium, die/das optional lösliche Pflanzennährstoffe enthält, enthält.

45. Verpackung gemäß Anspruch 44, wobei das Polymer mit einer wässrigen Lösung, die essentielle Pflanzennährstoffe enthält, vorhydratisiert wird.

46. Ein Verfahren zum Stabilisieren der Wasserverfügbarkeit für eine Pflanze, das das Heranführen eines Polymers gemäß einem der Ansprüche 1 bis 22 oder 40 an eine Anzuchtzusammensetzung oder ein Kulturmedium und das Hydratisieren des Polymers beinhaltet.

47. Verfahren gemäß Anspruch 46, wobei das Polymer nach der Hydratisierung des Polymers einer Anzuchtzusammensetzung oder einem Kulturmedium zugegeben wird.

48. Verfahren gemäß Anspruch 46, wobei das Polymer vor der Hydratisierung des Polymers einer Anzuchtzusammensetzung oder einem Kulturmedium zugegeben wird.

49. Verfahren gemäß einem der Ansprüche 47 oder 48, wobei das Polymer mit einer wässerigen Lösung, die essentielle Pflanzennährstoffe enthält, hydratisiert wird.

50. Ein hydratisierbares wasserquellbares Hydrogelpolymermaterial im Xerogelzustand, wobei das Polymermaterial ein Polyurethanpolymernetzwerk zum abgebbaren Halten von Wasser beinhaltet, wobei das Polyurethanpolymernetzwerk mindestens einen Anteil an verfügbaren Hydroxylgruppen beinhaltet und wobei das Material Einheiten der folgenden Formeln beinhaltet:
-CONH-X-NHCO-O-(CH₂CH₂O-)ₙ-;
-CO-X-CO-O-(CH₂CH₂O-)ₙ-;
-(CH₂CH₂O-)ₙ-(CONH-[X-NHCONH]ₘ)-; und
-X-(CH₂CH₂O-)ₙ-CH₂CH₂OH
wobei n eine ganze Zahl von 100 bis 300 ist und m eine ganze Zahl eines beliebigen Werts von mehr als oder gleich eins ist, X eine aliphatische oder aromatische di- oder multifunktionelle Einheit beinhaltet und wobei in mindestens manchen Einheiten X eine Funktionalität von mehr als zwei aufweist.

## Revendications

1. Un matériau polymère hydratable susceptible de gonfler dans l'eau qui forme un hydrogel lorsqu'il absorbe l'eau, ledit matériau polymère comprenant un réseau de polymère polyuréthane destiné à retenir l'eau de façon à pouvoir la libérer, dans lequel le réseau de polymère polyuréthanne comprend au moins une proportion de groupes hydroxyle disponibles et dans lequel le matériau comprend des unités des formules suivantes :
-CONH-X-NHCO-O-(CH₂CH₂O-)ₙ- ;
-CO-X-CO-O-(CH₂CH₂O-)ₙ- ;
-(CH₂CH₂O-)ₙ-(CONH-[X-NHCONH]ₘ)- ; et
-X-(CH₂CH₂O-)ₙ-CH₂CH₂OH
dans lesquelles n est un entier allant de 100 à 300, et m est un entier de n'importe quelle valeur supérieure ou égale à l'unité, X comprend une unité aliphatique ou aromatique di- ou multifonctionnelle, et dans lesquelles dans au moins certaines des unités X a une fonctionnalité supérieure à deux.

2. Un matériau polymère tel que revendiqué dans la revendication 1, dans lequel les groupes hydroxyle disponibles sont des groupes hydroxyle polyol attachés au réseau de polymère polyuréthane.

3. Un matériau polymère tel que revendiqué dans les revendications 1 ou 2, dans lequel le rapport des groupes hydroxyle disponibles aux liaisons urée et/ou uréthane est approximativement de 1 à 3.

4. Un matériau polymère tel que revendiqué dans n'importe quelle revendication précédente, dans lequel le matériau comprend une structure substantiellement poreuse.

5. Un matériau polymère tel que revendiqué dans la revendication 4, dans lequel la structure substantiellement poreuse est une mousse.

6. Un matériau polymère tel que revendiqué dans la revendication 5, dans lequel la mousse comprend approximativement de 5 % à 95 % de porosité par volume.

7. Un matériau polymère tel que revendiqué dans la revendication 5, dans lequel la mousse comprend approximativement de 10 % à 90 % de porosité par volume.

8. Un matériau polymère tel que revendiqué dans la revendication 5, dans lequel la mousse comprend approximativement de 20 % à 80 % de porosité par volume.

9. Un matériau polymère tel que revendiqué dans la revendication 5, dans lequel la mousse comprend approximativement 50 % de porosité par volume

10. Un matériau polymère tel que revendiqué dans les revendications 5 à 9, dans lequel la mousse comprend une structure substantiellement en alvéoles ouvertes.

11. Un matériau polymère tel que revendiqué dans la revendication 10, dans lequel la proportion d'alvéoles ouvertes est au moins d'environ 50 %.

12. Un matériau polymère tel que revendiqué dans la revendication 10, dans lequel la proportion d'alvéoles ouvertes est approximativement de 50 %.

13. Un matériau polymère tel que revendiqué dans les revendications 5 à 12, dans lequel la mousse comprend au moins une proportion de structures en alvéoles fermées.

14. Un matériau polymère tel que revendiqué dans les revendications 5 à 13, dans lequel la mousse comprend une pluralité de canaux continus qui s'étendent d'au moins un premier point sur au moins une surface extérieure de la mousse à au moins un deuxième point sur au moins une surface extérieure de la mousse.

15. Un matériau polymère tel que revendiqué dans les revendications 5 à 14, dans lequel la mousse comprend une pluralité de canaux continus qui s'étendent depuis des alvéoles au sein de la mousse jusqu'à au moins un point sur au moins une surface extérieure de la mousse.

16. Un matériau polymère tel que revendiqué dans n'importe quelle revendication précédente, dans lequel le matériau polymère comprend au moins un adjuvant.

17. Un matériau polymère tel que revendiqué dans la revendication 16, dans lequel cet au moins un adjuvant comprend un matériau susceptible de gonfler dans l'eau.

18. Un matériau polymère tel que revendiqué dans la revendication 16, dans lequel cet au moins un adjuvant comprend un élément nutritif pour végétaux.

19. Un matériau polymère tel que revendiqué dans la revendication 16, dans lequel cet au moins un adjuvant comprend un antioxydant.

20. Un matériau polymère tel que revendiqué dans la revendication 19, dans lequel le matériau polymère peut absorber de l'eau liée moléculairement.

21. Un matériau polymère tel que revendiqué dans les revendications 19 ou 20, dans lequel le matériau polymère peut absorber de l'eau capillaire.

22. Un matériau polymère tel que revendiqué dans les revendications 19 à 22, dans lequel le matériau polymère peut absorber de l'eau liquide libre.

23. Une méthode de préparation d'un matériau polymère hydratable susceptible de gonfler dans l'eau, ledit matériau polymère formant un hydrogel lorsqu'il absorbe l'eau, la méthode comprenant l'étape de faire réagir au moins un polyol avec au moins un isocyanate, dans laquelle suffisamment de groupes hydroxyle polyol réagissent pour former un réseau de polymère polyuréthane, et dans laquelle au moins une proportion de groupes hydroxyle polyol disponibles demeure non réagie et dans laquelle le polyol comprend du polyéthylène glycol ayant une masse moléculaire moyenne en nombre comprise ente 5 000 et 20 000 Da.

24. Une méthode pour préparer un matériau polymère tel que revendiqué dans la revendication 23, dans laquelle approximativement 25 % des groupes hydroxyle polyol demeurent non réagis.

25. Une méthode pour préparer un matériau polymère tel que revendiqué dans les revendications 23 ou 24, la méthode comprenant en outre l'étape consistant à fournir un moyen pour produire une mousse.

26. Une méthode pour préparer un matériau polymère tel que revendiqué dans la revendication 25, dans laquelle le moyen pour produire une mousse comprend de l'eau.

27. Une méthode pour préparer un matériau polymère tel que revendiqué dans la revendication 25 ou la revendication 26, dans laquelle un poids suffisant d'agent moussant ou écumant est fourni pour produire une mousse.

28. Une méthode pour préparer un matériau polymère tel que revendiqué dans la revendication 26 ou la revendication 27, dans laquelle le rapport relatif des groupes hydroxyle polyol aux groupes isocyanate est approximativement OH/NCO, 1,0/2,0 et le rapport relatif des molécules d'eau est compris dans la gamme allant de 0,4 à 2,4.

29. Une méthode pour préparer un matériau polymère tel que revendiqué dans les revendications 23 à 28, dans laquelle l'isocyanate est un polyisocyanate aromatique ayant une fonctionnalité supérieure ou égale à 2.

30. Une méthode pour préparer un matériau polymère tel que revendiqué dans la revendication 23, dans laquelle le polyéthylène glycol a une masse moléculaire moyenne en nombre comprise entre 6 000 et 9 000 Da.

31. Une méthode pour préparer un matériau polymère tel que revendiqué dans les revendications 23 à 30, la méthode comprenant en outre l'étape consistant à ajouter au moins un polyol disparate.

32. Une méthode pour préparer un matériau polymère tel que revendiqué dans la revendication 31, dans laquelle cet au moins un polyol disparate est le polypropylène glycol.

33. Une méthode pour préparer un matériau polymère tel que revendiqué dans les revendications 23 à 32, dans laquelle la réaction est effectuée à une température suffisante pour former un réseau de polymère.

34. Une méthode pour préparer un matériau polymère tel que revendiqué dans la revendication 33, dans laquelle la température est comprise entre approximativement 70 °C et approximativement 130 °C.

35. Une méthode pour préparer un matériau polymère tel que revendiqué dans la revendication 33, dans laquelle la température est comprise entre approximativement 80 °C et approximativement 100 °C.

36. Une méthode pour préparer un matériau polymère tel que revendiqué dans les revendications 23 à 35, la méthode comprenant en outre l'étape consistant à fournir au moins un catalyseur.

37. Une méthode pour préparer un matériau polymère tel que revendiqué dans les revendications 23 à 36, la méthode comprenant en outre l'étape consistant à ajouter au moins un matériau disparate susceptible de gonfler dans l'eau.

38. Une méthode pour préparer un matériau polymère tel que revendiqué dans les revendications 23 à 37, la méthode comprenant en outre l'étape consistant à ajouter au moins un élément nutritif pour végétaux.

39. Une méthode pour préparer un matériau polymère tel que revendiqué dans les revendications 23 à 38, la méthode comprenant en outre l'étape consistant à ajouter au moins un antioxydant.

40. Un matériau polymère produit par la méthode des revendications 23 à 39.

41. Une composition de rempotage pour végétaux comprenant un polymère selon l'une quelconque des revendications 1 à 22 ou 40.

42. Un milieu de culture pour végétaux comprenant un polymère selon l'une quelconque des revendications 1 à 22 ou 40.

43. Un conditionnement pour transporter des végétaux comprenant un récipient destiné à recevoir la racine ou la motte racinaire d'un végétal, ledit récipient contenant une quantité d'un polymère selon l'une quelconque des revendications 1 à 22 ou 40.

44. Un conditionnement selon la revendication 43, le conditionnement contenant aussi une composition de rempotage ou un milieu de croissance, facultativement contenant des éléments nutritifs solubles pour végétaux.

45. Un conditionnement selon la revendication 44, dans lequel le polymère est préhydraté avec une solution aqueuse contenant des éléments nutritifs essentiels pour végétaux.

46. Une méthode pour stabiliser la disponibilité en eau pour un végétal, comprenant l'introduction d'un polymère selon l'une quelconque des revendications 1 à 22 ou 40 dans une composition de rempotage ou un milieu de culture, et l'hydratation du polymère.

47. Une méthode selon la revendication 46, dans laquelle le polymère est ajouté à une composition de rempotage, ou un milieu de culture, après hydratation du polymère.

48. Une méthode selon la revendication 46, dans laquelle le polymère est ajouté à une composition de rempotage, ou un milieu de culture, avant hydratation du polymère.

49. Un conditionnement selon l'une ou l'autre des revendications 47 et 48, dans lequel le polymère est hydraté avec une solution aqueuse contenant des éléments nutritifs essentiels pour végétaux.

50. Un matériau polymère hydrogel hydratable susceptible de gonfler dans l'eau à l'état xérogel, ledit matériau polymère comprenant un réseau de polymère polyuréthane destiné à retenir l'eau de façon à pouvoir la libérer, dans lequel le réseau de polymère polyuréthanne comprend au moins une proportion de groupes hydroxyle disponibles et le matériau comprenant des unités des formules suivantes :
-CONH-X-NHCO-O-(CH₂CH₂O-)ₙ- ;
-CO-X-CO-O-(CH₂CH₂O-)ₙ- ;
-(CH₂CH₂O-)ₙ-(CONH-[X-NHCONH]ₘ)- ; et
-X-(CH₂CH₂O-)ₙ-CH₂CH₂OH
dans lesquelles n est un entier allant de 100 à 300, et m est un entier de n'importe quelle valeur supérieure ou égale à l'unité, X comprend une unité aliphatique ou aromatique di- ou multifonctionnelle, et dans lesquelles dans au moins certaines des unités X a une fonctionnalité supérieure à deux.
